# EUROPEAN PATENT SPECIFICATION

(11) **EP 3 540 678 B1**
(45) Date of publication and mention of the grant of the patent: **19.03.2025**
(21) Application number: 17871643.7
(22) Date of filing: 17.10.2017
(51) Int. Cl.: G06Q 30/06, G07F 17/00, G06Q 50/04

(54) **MACHINE TOOL MANAGEMENT SYSTEM**
VERWALTUNGSSYSTEM FÜR MASCHINENWERKZEUGE
SYSTÈME DE GESTION DE MACHINE-OUTIL

(30) Priority: 15.11.2016 JP 2016222093
(43) Date of publication of application: 18.09.2019
(73) Proprietor: DMG Mori Co., Ltd., Yamatokoriyama-shi, Nara 639-1160 (JP)
(72) Inventor: KANAMOTO, Masao, Yamatokoriyama-shi, Nara 639-1160 (JP)
(74) Representative: Isarpatent
(86) International application number: PCT/JP2017/037471
(87) International publication number: WO 2018/092485

(56) References cited:
- WO-A1-03/046787
- CN-A- 101 944 242
- JP-A- 2002 318 970
- JP-A- 2004 348 482
- JP-A- 2005 174 008
- US-A1- 2004 176 965
- US-A1- 2015 142 165

## Description

### Technical Field

0001 The present invention relates to a machine tool management system which manages, through the Internet, at least one machine tool disposed at a location available to a specified or unspecified user.

### Background Art

0002 Various systems connecting a machine tool disposed at a production site to a management device through the Internet have been known. The applicant has already provided a maintenance management system that connects at least one user's management device disposed on the user's side to a manufacturer's management device disposed on the machine tool manufacturer's side, through the Internet.

0003 In this maintenance management system, the user's management device is connected to a numerical control part (controller) of at least one machine tool, the machine tool including a drive mechanism unit and the numerical control part that controls operation of the drive mechanism unit.

0004 The user's management device includes user-side operational data storing means and data transmitting means, the use-side operational data storing means storing data on an operational status of the drive mechanism unit of the machine tool, the data transmitting means collecting data on the operational status of the drive mechanism unit from the numerical control part, accumulating the data in the user-side operational data storing means, checking whether predetermined transmission conditions are satisfied, and, only when the transmission conditions are satisfied, transmitting the operational status data of the drive mechanism unit accumulated in the use-side operational data storing means to the manufacturer's management device in an email form.

0005 On the other hand, the manufacturer's management device includes a manufacturer-side operational data storing means, data receiving means, consumption degree data storing means, consumption degree evaluating means, and alarm outputting means, the manufacturer-side operational data storing means storing the operational status data of the drive mechanism unit received from the user's management device, the data receiving means receiving the operational status data of the drive mechanism unit transmitted from the user's management device and updating the operational status data stored in the manufacturer-side operational data storing means with the received operational status data, the consumption degree data storing means storing data on a degree of consumption of the drive mechanism unit, the consumption degree evaluating means occasionally evaluating the degree of consumption of the drive mechanism unit based on the operational status data of the drive mechanism unit stored in the manufacturer-side operational data storing means and updating the consumption degree data stored in the consumption degree data storing means with the evaluated consumption degree data, and the alarm outputting means occasionally monitoring whether the consumption degree data stored in the consumption degree data storing means exceeds a predetermined reference value, and when the data exceeds the reference value, outputting an alarm providing a notice of the exceeding.

0006 In this maintenance management system, first, the data transmitting means of the user's management device collects data on an operational status (operational status data) of the drive mechanism unit from the numerical control part of the machine tool, and the collected data is accumulated in the user-side operational data storing means. It is occasionally checked whether predetermined transmission conditions are satisfied, and only when the transmission conditions are satisfied, the operational status data of the drive mechanism unit accumulated in the user-side operational data storing means is transmitted to the manufacturer's management device in an email form.

0007 The transmitted operational status data is received by the data receiving means, and the operational status data of the drive mechanism unit stored in the manufacturer-side operational data storing means is updated with the received operational status data. Further, the consumption degree evaluating means occasionally evaluates the degree of consumption of the drive mechanism unit based on the operational status data of the drive mechanism unit stored in the manufacturer-side operational data storing means, and updates the consumption degree data stored in the consumption degree data storing means with the evaluated consumption degree data. Further, the alarm outputting means occasionally monitors whether the consumption degree data stored in the consumption degree data storing means exceeds a predetermined reference value, and, upon confirming that the data exceeds the reference value, outputs an alarm providing a notice of the exceeding.

0008 Thus, this maintenance management system is configured such that the degree of consumption of the drive mechanism unit of the machine tool is occasionally evaluated and monitored, and when the degree of consumption exceeds a predetermined reference value, that is, when a consumable part of the drive mechanism unit approaches the end of its life, an alarm is output. Therefore, the manufacturer can easily recognize a consumable part approaching the end of its life based on the output alarm, which enables the manufacturer to predict when, how many, and which consumable part is needed. Consequently, the manufacturer does not have to excessively keep socks of consumable parts and therefore can greatly reduce the stocks of the consumable parts.

### Citation List

### Patent Literature

0009
Patent Literature 1: Japanese Unexamined Patent Application Publication No. 2004-295348
US 2004/176965 A1 relates to calculating equipment usage fees.

### Summary of Invention

### Technical Problem

0010 In recent years, in the field of machine tools, a combined machining lathe which has lathe elements as a basic structure but is adapted to be capable of milling, and highly functional machine tools, such as a machining center capable of 5-axis machining, which are able to perform advanced and complicated machining have been provided. Further, there are machine tools including an automatic tool changer (ATC), an automatic pallet changer (APC), a tool measurement system, or a workpiece measuring system; that is to say, a wide variety of machine tools have been provided. Furthermore, peripheral devices for the purpose of automation, such as a robot and a loader for loading and attachment/removal of a workpiece, also have been provided.

0011 Such highly functional machine tools are, of course, very expensive as compared with general-purpose machine tools, and when their peripheral device is included, they require a considerable amount of capital expenditure. Therefore, when a user is considering introduction of a machine tool, if the user can obtain an amount of work which achieves a profitable availability of the machine tool or the user can predict such an amount of work, the user can proceed with introduction of the machine tool; however, if not, the user has to refrain from capital expenditure.

0012 However, in recent years, uncertainty of the global economy has been increased; currently, many companies cannot accurately predict demand, and therefore they cannot make an aggressive capital expenditure. In particular, capital expenditure imposes a heavy burden on small and medium-sized companies. Therefore, demand for machine tool manufacturers is not stable and the demand is constantly subject to large fluctuation.

0013 Simultaneously, some companies have potential demand, e.g., there is a case where a company, which does not have an amount of work which sufficiently matches capital expenditure, has to give up receiving orders because their existing equipment is not capable of handling the orders. Further, there is also a case where a company puts off replacement of their equipment even though it is time to replace, because they cannot accurately predict demand.

0014 Accordingly, in such cases, charging a user a use fee according to usage of a machine tool, instead of selling a machine tool, will allow the user to avoid a risk of excessive capital expenditure. Further, it is very beneficial because the user only has to bear equipment costs determined by actual use of the machine tool.

0015 On the other hand, machine tool manufacturers have a problem that, when demand is unstable, they cannot perform a stable and levelled production; therefore, loss is produced in their production plan including personnel positioning and parts procurement, and such loss leads to increase in production costs. However, accommodating potential demand users have and facilitating replacement of equipment will make demand for machine tools relatively more stable. Such stabilization of demand will provide machine tool manufacturers with an advantage that they can realize a stable planed production that facilitates obtaining profits.

0016 Thus, recently, in the field of machine tools, development of a system is desired which does not necessitate selling a machine tool but can charge a user a use fee corresponding to usage of the machine tool so as to dig up potential demand the user have and so as to promote replacement of equipment. Additionally, development of a system is desired which allows the machine tool to be installed in any region and can be operated efficiently.

0017 Since such a system needs to satisfy the condition that the machine tool can be installed in any region, and needs to execute its processings efficiently, it is preferable that such a system is a system using the Internet.

0018 The present invention has been achieved in view of the above-described circumstances, and an object thereof is to provide a machine tool management system which allows a machine tool to be installed in any region and can charge a user a use fee corresponding to usage of the machine tool efficiently.

### Solution to Problem

0019 The present invention, for solving the above-described problems, relates to a machine tool management system including:
at least one machine tool having attached thereto a use monitoring device having a communication function for connecting to Internet, the machine tool being disposed at a location available to a specified or unspecified user; and
a management device connecting to the Internet and communicating with the use monitoring device,
the use monitoring device being configured to transmit information on usage of the machine tool to the management device; and
the management device being configured to calculate, as a use fee, a cost corresponding to the usage of the machine tool received from the use monitoring device, and then execute a processing of charging the calculated use fee to the user.

0020 In this machine tool management system, the at least one machine tool is disposed at a location available to a specified or unspecified user. In the case of a machine tool being used by a specified user, for example, the machine tool is disposed in a plant owned by the user. In contrast, in the case of a machine tool being used by an unspecified user, for example, the machine tool is disposed in a building arranged by the machine tool manufacturer.

0021 The machine tool has a use monitoring device attached thereto, the use monitoring device being connected to the Internet and being able to communicate with the management device that is also connected to the Internet. The management device is under management by the machine tool manufacturer; however, the management device can be installed at any location.

0022 When the machine tool disposed is used by a specified or unspecified user, the use monitoring device attached to the machine tool transmits information on usage of the machine tool to the management device. The information on the usage of the machine tool forms the basis of calculation for charging the user a commensurate cost for the use of the machine tool. For example, the information includes an operating time of the machine tool.

0023 The management device calculates, as a use fee, a cost corresponding to the usage of the machine tool received from the use monitoring device and executes a processing of charging the calculated use fee to the user.

0024 As described above, with the machine tool management system according to the present invention, the user does not have to purchase the machine tool and can perform necessary machining only by paying a use fee corresponding to usage of the machine tool. Therefore, even in the case where the amount of work the user has is not so large as to cause the machine tool to run at full capacity, the user can perform machining corresponding to the amount of work without installing a new machine tool; therefore, the user can accommodate demand. Further, paying a use fee corresponding to usage of the machine tool as described above allows the user to replace the existing machine tool with a state-of-the-art machine tool without making capital expenditure. Therefore, replacement of equipment is promoted even in the case where the user does not have stable demand or even in the case where there is a risk such as sudden fluctuation in demand.

0025 On the other hand, since new demand is generated which does not require capital expenditure, the machine tool manufacturer can realize a stable planned production that facilitates obtaining profits. Further, since the management system is a system using the Internet, the machine tool can be installed in any region. For example, the machine tool can be installed abroad, and, even in such a case where the machine tool is installed abroad, the charging processing can be executed efficiently.

0026 In the present invention, it is preferable that the management device is configured to make settlement of the use fee charged to the user, by executing a processing in cooperation with the use monitoring device. Such cooperative settlement means electronic settlement through the Internet, where the user uses the use monitoring device to make settlement of the cost charged to the user by the management device. Examples of the cooperative settlement include settlement by a credit card and settlement by automatic withdrawal from the user's bank account.

0027 Further, in the present invention, it is preferable that:
the use monitoring device is configured to execute a processing of registering the user in the management device; and
the management device is configured to execute a processing of transmitting identification information for the registered user to the use monitoring device.

0028 With this configuration, it is possible to identify a user who uses the machine tool management system, and the charging processing can be executed with high reliability for a user who has been registered and assigned identification information. Further, it is possible to accumulate information, such as usage history, on the user; making good use of such accumulated information enables prediction of the user's order-receiving trends and future capital expenditure.

0029 In the present invention, the machine tool may have provided therein associated facility and function to be used in machining performed with the machine tool, and
the use monitoring device may be configured to transmit the information on the usage of the machine tool inclusive of information on usage of the associated facility and function to the management device.

0030 The associated facility and function include, for example, an automatic programming apparatus, an interactive programming apparatus, a special cycle function, a tool measurement system, and a workpiece measurement system. In some machining operations, the user wants to use such an associated facility or such an associated function. With this configuration, the user can use the associated facility and function as necessary, and the machine tool manufacturer can charge the user a cost corresponding to usage of the associated facility and function.

0031 In the present invention, the machine tool may include a turning mechanism as a basic mechanism and include, as an additional mechanism, one or more mechanisms selected from among a tailstock mechanism, a steady rest mechanism, a milling mechanism, second and subsequent tool rests, second and subsequent spindle mechanisms, and a coolant mechanism; and
the use monitoring device may be configured to transmit the information on the usage of the machine tool inclusive of information on usage of the additional mechanism to the management device.

0032 In some machining operations, the user wants to use the additional mechanism in addition to the turning mechanism that is the basic mechanism. With this configuration, the user can use the additional mechanism as necessary, and the machine tool manufacturer can charge the user a cost corresponding to usage of the additional mechanism.

0033 In the present invention, the machine tool may include a milling mechanism as a basic mechanism and include, as an additional mechanism, one or more mechanisms selected from among a rotating shaft other than a tool spindle, a mechanism associated with a U-shaft of the tool spindle, a workpiece clamping mechanism, and a coolant mechanism; and
the use monitoring device may be configured to transmit the information on the usage of the machine tool inclusive of information on usage of the additional mechanism to the management device.

0034 In some machining operations, the user wants to use the additional mechanism in addition to the milling mechanism that is the basic mechanism. With this configuration, the user can use the additional mechanism as necessary, and the machine tool manufacturer can charge the user a cost corresponding to usage of the additional mechanism.

0035 In the present invention, the machine tool may include a main mechanism performing machining, and a peripheral mechanism provided around the main mechanism; and
the use monitoring device may be configured to transmit the information on the usage of the machine tool inclusive of information on usage of the peripheral mechanism to the management device.

0036 The peripheral mechanism includes, for example, a robot and a workpiece loading/unloading apparatus. In some machining operations, the user wants to use the peripheral mechanism in addition to the main mechanism. With this configuration, the user can use the peripheral mechanism as necessary, and the machine tool manufacturer can charge the user a cost corresponding to usage of the peripheral mechanism. Note that the main mechanism, as used herein, has a concept including the basic mechanism and the additional mechanism.

0037 In the present invention, an accessory instrument to be used in machining performed with the machine tool may be provided around the machine tool; and
the use monitoring device may be configured to transmit the information on the usage of the machine tool inclusive of information on usage of the accessory instrument to the management device.

0038 The accessory instrument includes, for example, a chuck, a soft jaw, a tool (including a tool holder), a throw-away tip, and a detachable measurement instrument. In some machining operations, the user wants to use the accessory instrument that can be used in the machine tool, in addition to the machine tool. With this configuration, the user can use the accessory instrument as necessary, and the machine tool manufacturer can charge the user a cost corresponding to usage of the accessory instrument.

0039 In the present invention, the machine tool may have provided therein various sensors each detecting a status of the machine tool; and
the use monitoring device may be configured to transmit information obtained from the various sensors, as the information on the usage of the machine tool, to the management device.

0040 Note that the sensors include, for example, an electric power meter, a motor load ammeter, an accelerometer, and a thermometer, and the information obtained from the sensors includes, for example, electric energy data, spindle motor load data, feed motor load data, vibration data of each machine tool part, and temperature data of each machine tool part. Collecting such information enables obtaining of data on a load status of the machine tool and data on performance of the machine tool against load; the data obtained can be utilized in development and improvement of a machine tool of the next version.

0041 Further, in the present invention, the management device may be configured to analyze the information obtained from the various sensors received from the use monitoring device, determine whether the machine tool has an abnormality or whether the machine tool is predicted to fall into a state of having an abnormality, and, when it is confirmed that the machine tool has an abnormality or when the machine tool is predicted to fall into the state of having an abnormality, transmit a signal relating to the abnormality to the use monitoring device. With this configuration, the user can use the machine tool with a sense of security. Note that the expression "the machine tool is predicted to fall into a state of having an abnormality" means that the machine tool will fall into a state of having an abnormality in the near future, the near feature meaning, for example, a future determined by the number of days which allows the machine tool manufacturer to resolve the abnormality before the machine tool falls into the state of having the abnormality.

0042 In the present invention, the use monitoring device may be configured to transmit data on an operational status obtained from the machine tool to the management device; and
the management device may be configured to accumulate the received data on the operational status, and analyze the accumulated data to store the data at least as production technology information.

0043 The data on the operational status (operational information) includes, for example, cutting conditions (including a cutting speed, a feed speed, a workpiece material, and a tool material), tool life data, and data on spindle rotation speed, etc. Transmitting such operational information to the management device enables accumulation of a wide variety of production technology information in the management device, and analyzing, editing, and systematizing the accumulated production technology information as appropriate makes the production technology information versatile and highly reliable.

0044 Further, in the present invention, the use monitoring device may be configured to execute a processing of requesting permission from the management device to use the production technology information stored in the management device; and
the management device may be configured to calculate the use fee for the machine tool according to use/non-use of the production technology information.

0045 As described above, the production technology information is collected in the management device; therefore, versatile and highly reliable production technology information is accumulated in the management device. Therefore, the user can utilize the production technology information to more properly perform machining. On the other hand, the machine tool manufacturer can obtain commensurate profits by providing the accumulated production technology information to the user and charging the user the use fee according to use of the production technology information.

0046 In the present invention, the machine tool may be disposed at a location available to an unspecified user;
the use monitoring device may be configured to execute a processing of requesting permission from the management device to use the machine tool, and when obtaining the permission from the management device, execute a processing of making the machine tool operational; and
the management device may be configured to, when receiving a signal requesting permission to use the machine tool from the use monitoring device, execute a processing of recognizing the user and execute a processing of judging permissibility and sending a reply to the use monitoring device.

0047 With this machine tool management system, the machine tool is disposed at a location available to an unspecified user. Further, the use monitoring device executes a processing of requesting permission from the management device to use the machine tool, and when obtaining the permission from the management device, executes a processing of making the machine tool operational.

0048 On the other hand, when receiving a signal requesting permission to use the machine tool from the use monitoring device, the management device executes a processing of recognizing the user and executes a processing of judging permissibility and sending a reply to the use monitoring device.

0049 Accordingly, with this management system, the user can use the machine tool only when the user is recognized by the management device and permitted to use the machine tool. Therefore, it is possible to eliminate use by a user who has used the machine tool in an improper manner and use by a user who has not made proper settlement, which enables proper operation of the system and increased safety.

0050 In the case where the machine tool is disposed at a location used by a specified user, the user's location is obvious and it is assumed that reliability of the user has been built; therefore, the above-described problem is unlikely to occur. In contrast, in the case where the machine tool is disposed at al location available to a number of unspecified users, it is not always true that reliability of the user has been built; therefore, the above-described configuration is effective particularly in such a case.

### Advantageous Effects of Invention

0051 As described above, with the machine tool management system according to the present invention, the user does not have to purchase the machine tool and can perform necessary machining only by paying a use fee corresponding to usage of the machine tool. Therefore, even in the case where the amount of work the user has is not so large as to cause the machine tool to run at full capacity, the user can perform machining corresponding to the amount of work without installing a new machine tool; therefore, the user can accommodate demand. Further, paying a use fee corresponding to usage of the machine tool as described above allows the user to replace the existing machine tool with a state-of-the-art machine tool without making capital expenditure. Therefore, replacement of equipment is promoted even in the case where the user does not have stable demand or even in the case where there is a risk such as sudden fluctuation in demand.

0052 On the other hand, since new demand is generated which does not require capital expenditure, the machine tool manufacturer can achieve a stable planned production that facilitates obtaining profits. Further, since the management system is a system using the Internet, the machine tool can be installed in any region. For example, the machine tool can be installed abroad, and, even in such a case where the machine tool is installed abroad, the charging processing can be executed efficiently.

### Brief Description of Drawings

0053
Fig. 1 is a block diagram showing a schematic configuration of a machine tool management system according to an embodiment of the present invention;
Fig. 2 is a block diagram showing a configuration of a use monitoring device, a machine tool, and other components according to the embodiment;
Fig. 3 is a block diagram showing a configuration of a management device according to the embodiment; and
Fig. 4 is a flowchart showing a procedure for using the machine tool in the machine tool management system according to the embodiment.

### Description of Embodiments

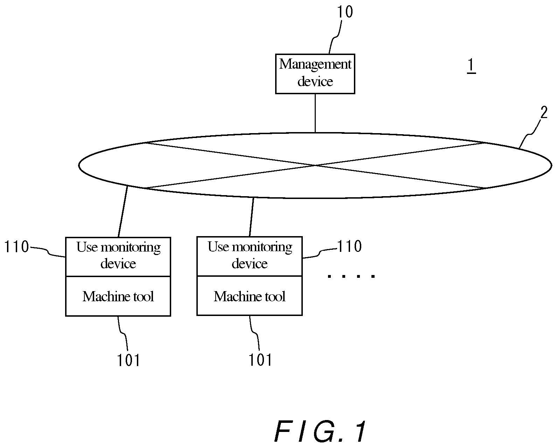

0054 Hereinafter, a specific embodiment of the present invention will be described with reference to the drawings. Fig. 1 is a block diagram showing a schematic configuration of a machine tool management system (hereinafter, simply referred to as "management system") according to the embodiment.

0055 As shown in Fig. 1, the management system 1 according to this embodiment is composed of a management device 10 connected to Internet 2 and a plurality of machine tools 101 each having a use monitoring device 110 attached thereto, the use monitoring device 110 being connected to the Internet 2.

0056 Each machine tool 101 is disposed at a location available to a specified user, e.g., in a machining plant owned by a specified user, or a location available to an unspecified user, e.g., in a building arranged by the machine tool manufacturer. The building arranged by the machine tool manufacturer is available to a number of unspecified users, and has a concept like "machine center". The management device 10 is under management by the machine tool manufacturer; however, the management device 10 can be installed at any location. Hereinafter, each component is described in detail.

0057

### [Machine Tool]

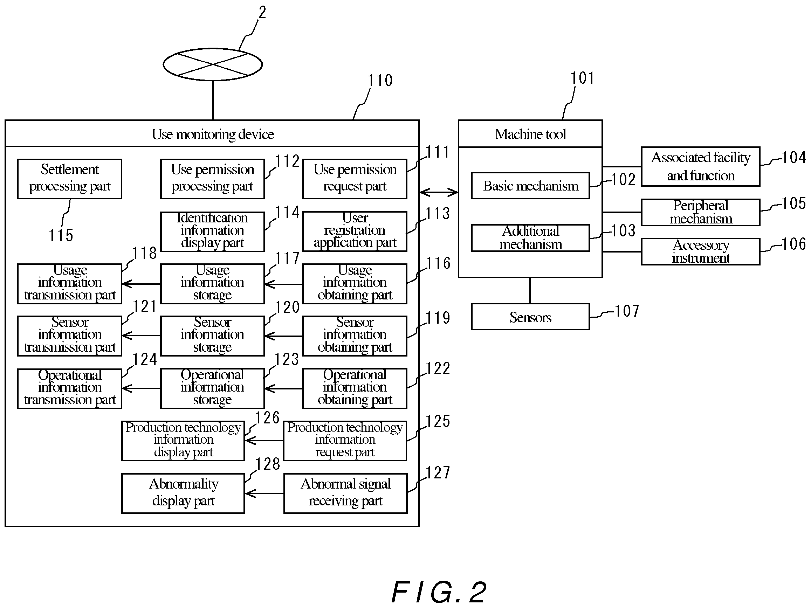

As shown in Fig. 2, each machine tool 101 includes a basic mechanism 102 and an additional mechanism 103. In addition, the machine tool 101 has provided therein associated facility and function (hereinafter referred to as "associated facility") 104, a peripheral mechanism 105, and various sensors 107, and has provided therearound an accessory instrument 106. Note that the basic mechanism 102 and the additional mechanism 103 perform machining, and they are regarded as constituting a main mechanism.

0058 The machine tool 101 can be of any type, examples of which include an NC lathe and a machining center, which are most common. In the case of an NC lathe, the basic mechanism 102 is a turning mechanism, and the additional mechanism 103 is, for example, one or more mechanisms selected from among a tailstock mechanism, a steady rest mechanism, a milling mechanism, second and subsequent tool rests, second and subsequent spindle mechanisms, and a coolant mechanism. In the case of a machining center, the basic mechanism 102 is a milling mechanism, and the additional mechanism 103 is, for example, one or more mechanisms selected from among a rotating shaft other than a tool spindle, a mechanism associated with a U-shaft of the tool spindle, a workpiece clamping mechanism, and a coolant mechanism.

0059 The associated facility 104 is a facility or function incorporated in or attached to the machine tool 101, examples of which include an automatic programming apparatus, an interactive programming apparatus, a special cycle function, a tool measurement system, and a workpiece measurement system.

0060 The peripheral mechanism 105 is a mechanism provided around the basic mechanism 102 and additional mechanism 103 (main mechanism) performing machining, examples of which include a robot and a workpiece loading/unloading apparatus (including a loader and the like). The accessory instrument 106 is an instrument to be used in machining performed with the machine tool 101, which is disposed around the machine tool 101. The accessory instrument 106 includes, for example, a chuck, a soft jaw, a tool (including a tool holder), a throw-away tip, and a detachable measurement instrument.

0061 Further, the machine tool 101 has attached thereto the sensors 107. The sensors 107 include, for example, an electric power meter, a motor load ammeter, an accelerometer, and a thermometer. The sensors 107 provide, for example, information such as electric energy data, spindle motor load data, feed motor load data, vibration data of each machine tool part, and temperature data of each machine tool part.

0062

### [Use Monitoring Device]

As shown in Fig. 2, each use monitoring device 110 consists of functional units: a use permission request part 111, a use permission processing part 112, a user registration application part 113, an identification information display part 114, a settlement processing part 115, a usage information obtaining part 116, a usage information storage 117, a usage information transmission part 118, a sensor information obtaining part 119, a sensor information storage 120, a sensor information transmission part 121, an operational information obtaining part 122, an operational information storage 123, an operational information transmission part 124, a production technology information request part 125, a production technology information display part 126, an abnormal signal receiving part 127, and an abnormality display part 128.

0063 Note that the use monitoring device 110 is composed of a typical computer including a CPU, an ROM, and an RAM, as well as an input device, such as a keyboard or the like, and a display. The functions of the use permission request part 111, use permission processing part 112, user registration application part 113, identification information display part 114, settlement processing part 115, usage information obtaining part 116, usage information transmission part 118, sensor information obtaining part 119, sensor information transmission part 121, operational information obtaining part 122, operational information transmission part 124, production technology information request part 125, production technology information display part 126, abnormal signal receiving part 127, and abnormality display part 128 are each implemented by appropriate software. The usage information storage 117, the sensor information storage 120, and the operational information storage 123 are composed of an appropriate storage medium, such as an RAM or the like.

0064 Once a user inputs his or her identification information and particulars of usage of the additional mechanism 103, associated facility 104, peripheral mechanism 105, and accessory instrument 106 of the machine tool 101 to be used, the use permission request part 111 transmits information on the input identification information and usage particulars to the management device 10 and requests permission from the management device 10 to use the machine tool 101. Upon receiving a use permitting signal from the management device 10, the use permission processing part 112 transmits a use permission signal to a controller of the machine tool 101. Upon receiving the use permission signal, the controller brings an operation panel in a non-operational state (locked state) into an operational state (unlocked state), thereby enabling operation of the machine tool 101. In contrast, upon receiving a not-permitting signal from the management device 10, the use permission processing part 112 displays on the display the receiving of the not-permitting signal. In this case, the machine tool 101 is maintained at the non-operational state (locked state).

0065 Note that in a case where the user has not been assigned identification information, the user registration application part 113 executes a processing. That is, once the user inputs information needed for registration, the user registration application part 113 transmits the input registration information to the management device 10. The transmitted registration information is registered by a user registration processing part 11, which is described in detail later, and identification information for the user is transmitted from the management device 10 to the use monitoring device 110. The received identification information is displayed on the display through a processing by the identification information display part 114. The registration information includes, for example, personal information, such as the user's address and name, and information needed for electronic settlement (e.g., credit card information, a bank account number available for withdrawal, or the like.). Further, in a case where the machine tool 101 is installed at a location used by a specified user, the user's identification information in association with information specific to the machine tool 101 or information specific to the user monitoring device 110 is transmitted to the management device 10 and registered by the user registration processing part 11.

0066 The usage information obtaining part 116 obtains usage information of the controller of the machine tool 101, associated facility 104, peripheral mechanism 105, and sensors 107 from them. Further, the usage information obtaining part 116 obtains information on the usage particulars, as usage information, from the use permission request part 111, obtains data on an operational status (operational information) of the controller of the machine tool 101, etc., as usage information, from them, and obtains, as usage information, the status of utilization of production technology information provided to the production technology information request part 125, which is described in detail later, by the management device 10. The usage information forms the basis of calculation for charging the user a commensurate cost for the use of the machine tool 101, the usage information including, for example, an operating time and a load status of the machine tool 101, use/non-use and operating times of the associated facility 104 and peripheral mechanism 105, use/non-use of the accessory instrument 106, and the status of utilization of the production technology information provided by the management device 10.

0067 More specifically, in a case where the controller of the machine tool 101 has equipped therewith an automatic programming apparatus or an interactive programming apparatus as the associated facility 104, when the user uses the automatic programming apparatus to generate an NC program or uses the interactive programming apparatus to generate an interactive program, the usage information obtaining part 116 obtains information on the use of the programming apparatus as usage information. Further, in a case where the controller of the machine tool 101 has equipped therewith special cycle functions, when the user selects any of the special cycle functions (e.g., when the user presses a button or icon for the special cycle function on a display of the controller), the usage information obtaining part 116 obtains information on the selection of the special cycle function as usage information. Furthermore, in a case where the machine tool 101 has equipped therewith a tool measurement system or a workpiece measurement system, when the user uses the measurement system, the usage information obtaining part 116 obtains information on the use of the measurement system as usage information.

0068 Further, in the case where the machine tool 101 includes the additional mechanism 103, the usage information obtaining part 116 obtains use/non-use of the additional mechanism 103 as usage information based on NC codes of an NC program analyzed in the controller of the machine tool 101. Furthermore, in a case where a workpiece loading/unloading apparatus, such as a gantry loader, or a robot is provided as the peripheral mechanism 105, the usage information obtaining part 116 detects use/non-use of the peripheral mechanism 105 based on signals transmitted between the controller of the machine tool 101 and the peripheral mechanism 105 during operation, and obtains the detected use/non-use as usage information. Furthermore, in a case where a dispenser containing a chuck, a soft jaw, various tools, and the like is provided as the accessory instrument 106, the usage information obtaining part 116 detects an operational signal which is obtained from the dispenser when the user picks a necessary instrument from the dispenser, and obtains the detected operational signal as usage information.

0069 Further, the usage information obtained from the sensors 107 includes, for example, electric energy data, spindle motor load data, and feed motor load data. Further, the above-mentioned operational information includes information obtained through analysis of an NC program, e.g., rotational speed information (S codes) and feed information (F codes), as well as miscellaneous function information (M codes), such as on/off of hydraulic pressure for steady rest and the like.

0070 The usage information obtained by the usage information obtaining part 116 is stored into the usage information storage 117. The usage information stored in the usage information storage 117 is transmitted to the management device 10 by the usage information transmission part 118 at the point of time when the user ends the use of the machine tool 101.

0071 In parallel with the usage information obtaining part 116, the sensor information obtaining part 119 obtains output data from the sensors 107 periodically or non-periodically and stores the obtained data into the sensor information storage 120. The data obtained from the sensors 107 includes, for example, electric energy data, spindle motor load data, feed motor load data, vibration data of each machine tool part and temperature data of each machine tool part. The data (sensor information) stored in the sensor information storage 120 is transmitted to the management device 10 by the sensor information transmission part 121 periodically or non-periodically until the user ends the use of the machine tool 101.

0072 In parallel with the usage information obtaining part 116, the operational information obtaining part 122 obtains data on the operational status (operational information) of the controller of the machine tool 101, etc. from them, and stores the obtained data into the operational information storage 123. The operational information includes, for example, data on cutting conditions (including a cutting speed, a feed speed, a workpiece material, and a tool material) for a machining operation performed in the machine tool 101, tool life data, and data such as a spindle rotation speed. The operational information stored in the operational information storage 123 is transmitted to the management device 10 by the operational information transmission part 124 at the point of time when the user ends the use of the machine tool 101.

0073 In accordance with an input made by the user, the production technology information request part 125 requests the management device 10 to provide production technology information, to obtain necessary production technology information form the management device 10. The obtained production technology information is displayed on the display through the production technology information display part 126.

0074 The abnormal signal receiving part 127 receives an abnormal signal transmitted from the management device 10. The received abnormal signal is displayed on the display through the abnormality display part 128.

0075 The settlement processing part 115 makes an electronic settlement (e.g., a known credit card settlement) through the Internet 2 for a use fee charged by the management device 10, by executing a processing in cooperation with the management device 10.

0076

### [Management Device]

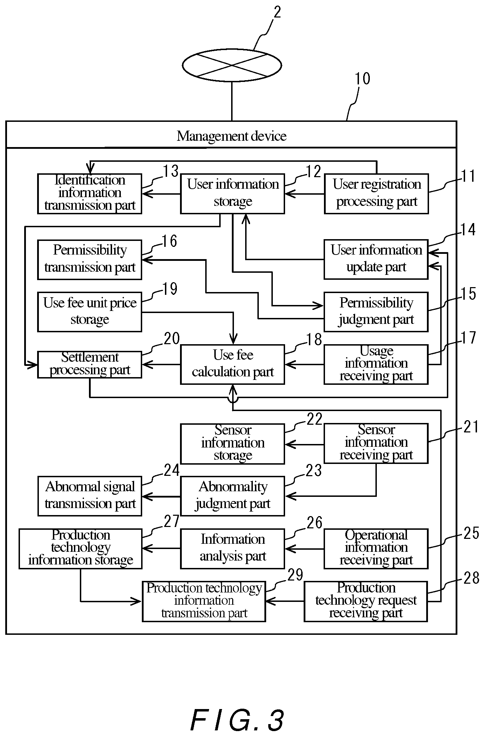

As shown in Fig. 3, the management device 10 consists of functional units: a user registration processing part 11, a user information storage 12, an identification information transmission part 13, an user information update part 114, a permissibility judgment part 15, a permissibility transmission part 16, a usage information receiving part 17, a use fee calculation part 18, a use fee unit price storage 19, a settlement processing part 20, a sensor information receiving part 21, a sensor information storage 22, an abnormality judgment part 23, an abnormal signal transmission part 24, an operational information receiving part 25, an information analysis part 26, a production technology information storage 27, a production technology request receiving part 28, and a production technology information transmission part 29.

0077 Note that the management device 10 is also composed of a typical computer including a CPU, an ROM, and an RAM, as well as an input device, such as a keyboard or the like, and a display. The functions of the user registration processing part 11, identification information transmission part 13, user information update part 114, permissibility judgment part 15, permissibility transmission part 16, usage information receiving part 17, use fee calculation part 18, settlement processing part 20, sensor information receiving part 21, abnormality judgment part 23, abnormal signal transmission part 24, operational information receiving part 25, information analysis part 26, production technology request receiving part 28, and production technology information transmission part 29 are each implemented by appropriate software. The user information storage 12, the use fee unit price storage 19, the sensor information storage 22, and the production technology information storage 27 are composed of an appropriate storage medium, such as an RAM or the like.

0078 The user registration processing part 11 is a functional unit that accepts a registration application from the user registration application part 113 of each use monitoring device 110 and executes a registration processing for the user. The user registration processing part 11 accepts registration information transmitted from the user registration application part 113 and stores the accepted registration information into the user information storage 12. Further, the user registration processing part 11 generates identification information which is specific to the user, assigns the user the identification information, and stores the assigned identification information into the user information storage 12. Note that, as described above, in the case where the machine tool 101 is installed at a location used by a specified user, the user's identification information in association with the information specific to the machine tool 101 or the information specific to the use monitoring device 110 is stored into the user information storage 12.

0079 The assigned identification information is transmitted to the use monitoring device 110 by the identification information transmission part 13. The user information storage 12 is configured to store usage history and the status of settlement for each registered user. Based on information from the usage information receiving part 17 and from the settlement processing part 20, as well as information input externally in some cases, the information stored in the user information storage 12 is updated by the user information update part 14.

0080 The permissibility judgment part 15 receives a signal requesting use permission transmitted from the use permission processing part 111 of each use monitoring device 110, which is described in detail later, and judges whether the use permission requesting user can be permitted to use the machine tool 101. Specifically, the permissibility judgment part 15 checks the usage history and settlement status of the user by referring to the user information storage 12. When an improper usage is found in the usage history and/or it is confirmed that a settlement remains undone, the permissibility judgment part 15 makes a judgment that the user cannot be permitted to use the machine tool 101. Otherwise, the permissibility judgment part 15 makes a judgment that the user can be permitted to use the machine tool 101.

0081 Note that the permissibility judgment part 15 may be configured such that, in the case where the machine tool 101 is installed at a location used by a specified user, the use permission requesting user is not permitted to use the machine tool 101 if the user is not the user corresponding to the machine tool 101. However, permitting the use permission requesting user to use the machine tool 101 even in such a case increases availability of the machine tool 101, which results in increase in the machine tool manufacturer's profits. Therefore, where there is no other problem, the permissibility judgment part 15 may be configured to permit many users to use the machine tool 101.

0082 After the permissibility judgment part 15 makes a judgment about permissibility for the user in the above-described manner, the result of the judgment is transmitted to the use monitoring device 110 by the permissibility transmission part 16.

0083 The usage information receiving part 17 is a functional unit that receives the usage information transmitted from the usage information transmission part 18 of each use monitoring device 110, and forwards the received usage information to the use fee calculation part 18.

0084 The use fee calculation part 18 calculates a use fee for the user by referring to a use fee unit price for each item stored in the use fee unit price storage 19 based on the received usage information, and forwards the calculated use fee to the settlement processing part 20. For example, the use fee calculation part 18 calculates a basic use fee for use of the machine tool 101 by multiplying the operating of use by the unit price therefor, calculates an additional use fee based on the load status of the machine tool 101 and use/non-use of the associated facility 104, peripheral mechanism 105, accessory instrument 106, and production technology information, and then calculates a total use fee by adding up the basic use fee and the additional use fee. Note that, in this case, the unit prices may be varied according to the frequency of use of the associated facility or the like 104, peripheral mechanism 105, and accessory instrument 106. For example, a lower unit price is applied to a greater number of times of use, or a lower unit price is applied to a longer operating time. Further, points may be provided to the user according to use so that the user can use some functions or the like with no charge when a certain number of points is reached.

0085 The settlement processing part 20 transmits the use fee calculated by the use fee calculation part 18 to the use monitoring device 110, and makes electronic settlement of the use fee in cooperation with the settlement processing part 115 of the use monitoring device 110. The electronic settlement has been described above.

0086 The sensor information receiving part 21 is a functional unit that receives the sensor information transmitted from the sensor information transmission part 121 of each use monitoring device 110. The sensor information receiving part 21 stores the received sensor information into the sensor information storage 22 and forwards the received sensor information to the abnormality judgment part 23.

0087 The abnormality judgment part 23 analyzes the received sensor information and judges whether the machine tool 101 has any abnormality. When confirming that the machine tool 101 has an abnormality, the abnormality judgment part 23 transmits an abnormal signal relating to the abnormality to the use monitoring device 110 through the abnormal signal transmission part 24.

0088 The operational information receiving part 25 is a functional unit that receives the operational information transmitted from the operational information transmission part 124 of each use monitoring device 110, and forwards the received operational information to the information analysis part 26. The information analysis part 26 analyzes the received operational information to extract production technology information, edits and systematizes the extracted production technology information, and stores the edited and systematized production technology information into the production technology information storage 27.

0089 The production technology request receiving part 28 receives the request signal from the production technology information request part 125 of each use monitoring device 110 and forwards the received request signal to the production technology information transmission part 29. The production technology information transmission part 29 refers to the production technology information stored in the production technology information storage 27, reads out the production technology information corresponding to the received request signal, and transmits the read-out production technology information to the use monitoring device 110.

0090 In the management system 1 according to this embodiment having the above-described configuration, use of a machine tool 101 by a user and charging according to usage of the machine tool 101 are executed in the following procedure.

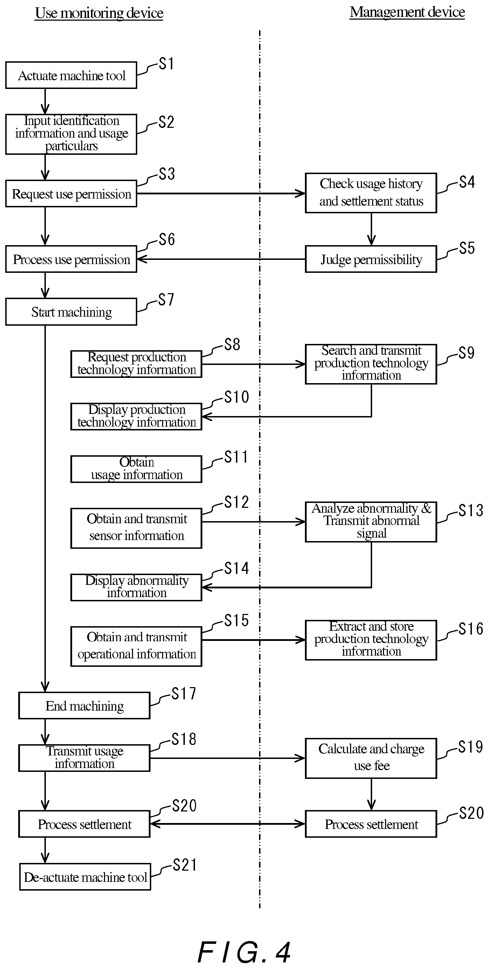

0091 As sown in Fig. 4, first, once a user turns on a machine tool 101 to be used that is connected to the Internet 2, the machine tool 101 and the corresponding use monitoring device 110 are actuated (step S1). Note that, at this moment, the user cannot operate the machine tool 101 yet.

0092 Subsequently, once the user inputs, into the use monitoring device 110, his or her identification information as well as particulars (usage particulars) of the additional mechanism 103, associated facility 104, peripheral mechanism 105, and accessory instrument 106 to be used (step S2), information on the input identification information and use particulars together with a signal requesting use permission are transmitted from the use permission request part 111 to the management device 10 (step S3), and the transmitted information and signal are received by the permissibility judgment part 15.

0093 The permissibility judgment part 15 refers to the data stored in the user information storage 12 based on the received information on the identification information and usage particulars to check the usage history and settlement status of the user corresponding to the transmitted identification information (step S4). In the case where an improper use is found in the usage history and/or it is confirmed that a settlement remains undone, the permissibility judgment part 15 makes a judgment that the user cannot be permitted to use the machine tool 101. Otherwise, the permissibility judgment part 15 makes a judgment that the user can be permitted to use the machine tool 101. Thereafter, the permissibility judgment part 15 transmits the result of the judgment about permissibility of use of the machine tool 101 to the use monitoring device 110 through the permissibility transmission part 16 (step S5).

0094 Note that, in the case where the user has not been registered, as described above, the user registration application part 113 of the use monitoring device 110 and the user registration processing part 11 of the management device 10 execute the processing to assign the user identification information and register the user.

0095 Upon receiving the result of the judgment about the permissibility from the permissibility transmission part 16, in the case where the result is "permissible", the use permission processing part 112 of the use monitoring device 110 transmits a use permission signal to the controller of the machine tool 101 (step S6). Upon receiving the use permission signal, the controller brings the operation panel in the non-operational state (locked state) into the operational state (unlocked state). Thereby, the machine tool 101 becomes ready for operation. In contrast, in the case of receiving the "impermissible" signal from the management device 10, the use permission processing part 112 displays on the display the receiving of the "impermissible" signal.

0096 Thereafter, in the case where the use of the machine tool 101 to be used is permitted, the user uses the machine tool 101 to perform necessary machining (step S7). Note that the user can utilize the production technology information accumulated in the production technology information storage 27 of the management device 10 through the production technology information request part 125 of the use monitoring device 110. When the user requests necessary production technology information through the production technology information request part 125 (step S8), the request is received by the production technology request receiving part 28 of the management device 10, which causes the production technology information transmission part 29 to search the production technology information accumulated in the production technology information storage 27 and transmit the requested production technology information to the use monitoring device 110 (step S9). In the use monitoring device 110, the transmitted production technology information is displayed on the display through the production technology information display part 126 (step S10). Thus, the user can utilize the production technology information he or she requested.

0097 While the machining is being performed, the usage information obtaining part 116 of the use monitoring device 110 obtains usage information of the controller of the machine tool 101, sensors 107, associated facility 104, and peripheral mechanism 105 from them, obtains the information on the usage particulars as usage information from the use permission processing part 111, and obtains, as usage information, the status of utilization of the production technology information obtained from the management device 10 through the production technology information request part 25, and the obtained usage information is stored into the usage information storage 117 (step S11).

0098 Further, while the machining is being performed, the sensor information obtaining part 119 of the use monitoring device 110 also stores data (sensor information) output from the sensors 107 into the sensor information storage 120 periodically or non-periodically, and the stored sensor information is transmitted to the management device 10 periodically or non-periodically by the sensor information transmission part 121 (step S12).

0099 Furthermore, while the machining is being performed, the operational information obtaining part 122 also obtains data on the operational status (operational information) of the controller of the machine tool 101, etc. from them periodically or non-periodically, and stores the obtained data into the operational information storage 123, and the stored operational information is transmitted to the management device 10 periodically or non-periodically by the operational information transmission part 124 (step S15).

0100 On the other hand, in the management device 10, the sensor information receiving part 21 receives the sensor information transmitted from the use monitoring device 110 and stores the received sensor information into the sensor information storage 22, and the abnormality judgment part 23 analyzes the received data and judges whether the machine tool 101 has any abnormality. In the case where it is confirmed that the machine tool 101 has an abnormality, an abnormal signal relating to the abnormality is transmitted to the use monitoring device 110 through the abnormal signal transmission part 24 (step S13). Once the abnormal signal is transmitted from the management device 10, the abnormal signal receiving part 127 of the use monitoring device 110 receives the abnormal signal and displays the received abnormal signal on the display through the abnormality display part 128 (step S14).

0101 Further, the operational information receiving part 25 receives the operational information transmitted from the use monitoring device 110, and the information analysis part 26 analyzes the received operational information to extract production technology information, edits and systematizes the extracted production technology information, and then stores the edited and systematized production technology information into the production technology information storage 27 (step S16).

0102 When the user ends the machining operation (step S17), the usage information stored in the usage information storage 117 of the use monitoring device 110 is transmitted to the management device 10 by the usage information transmission part 118 (step S18).

0103 Once the transmitted usage information is received by the usage information receiving part 17 of the management device 10, the use fee calculation part 18 calculates a use fee for the user by referring to the use fee unit price for each item stored in the use fee unit price storage 19 based on the received usage information, and forwards the calculated use fee to the settlement processing part 20 (step S19).

0104 Thereafter, the settlement processing part 20 transmits the calculate use fee to the use monitoring device 110, and makes electronic settlement of the use fee in cooperation with the settlement processing part 115 of the use monitoring device 110 (step S20). After the settlement is finished, the machine tool 101 is de-actuated, that is, brought into the locked state.

0105 As described in detail above, with the management system 1 according to this embodiment, the user does not have to purchase the machine tool 101; the user can perform necessary machining only by paying a use fee corresponding to usage of the machine tool 101. Therefore, even in the case where the amount of work the user has is not so large as to cause the machine tool 101 to run at full capacity, the user can perform machining corresponding to the amount of work without installing a new machine tool 101; therefore, the user can accommodate demand. Further, paying a use fee corresponding to usage of the machine tool 101 as described above allows the user to replace the existing machine tool with a state-of-the-art machine tool 101 without making capital expenditure. Therefore, replacement of equipment is promoted even in the case where the user does not have stable demand or even in the case where there is a risk such as sudden fluctuation in demand.

0106 On the other hand, since new demand is generated which does not require capital expenditure, the machine tool manufacturer can realize a stable planned production that facilitates obtaining profits. Further, since the management system 1 is a system using the Internet 2, the machine tool 101 can be installed in any region. For example, the machine tool 101 can be installed abroad, and, even in such a case where the machine tool 101 is installed abroad, the charging processing can be executed efficiently.

0107 Further, in this embodiment, since the machine tool 101 including the additional mechanism 103 is employed and the associated facility 104, the peripheral mechanism 105, and the accessory instrument 106 are also provided, the management system 1 can satisfy user's various requests and demands, which results in increase in availability of the machine tool 101.

0108 Further, since the management system 1 is configured such that the sensor information obtained from the sensors 107 provided in the machine tool 101 is accumulated in the sensor information storage 22 of the management device 10, the load status of the machine tool 101 and performance of the machine tool 101 against load can be evaluated by analyzing the obtained data, and evaluation results obtained can be utilized in development and improvement of a machine tool of the next version.

0109 Further, the management system 1 according to this embodiment is configured such that the information obtained from the sensors 107 provided in the machine tool 101 is analyzed by the abnormality judgment part 23 of the management device 10, and when a judgment is made that the machine tool 101 has an abnormality, an abnormal signal is transmitted from the management device 10 to the use monitoring device 110 and displayed on the display of the use monitoring device 110. Therefore, when the machine tool 101 to be used has an abnormality, the user can recognize the abnormality instantaneously. Therefore, the user can use the machine tool 101 with a sense of security.

0110 Further, the management system 1 according to this embodiment is configured such that the operational information of the machine tool 101 is collected from the use monitoring device 110, and the collected operational information is analyzed by the information analysis part 26 to extract production technology information, and the extracted production technology information is edited and systematized, and then accumulated in the production technology information storage 27. Therefore, versatile and highly reliable production technology information can be accumulated in the production technology information storage 27. Further, since the user can utilize the thus-accumulated production technology information, the user can more properly perform machining by utilizing the production technology information. On the other hand, the machine tool manufacturer can obtain commensurate profits by providing the accumulated production technology information to the user and charging the user the use fee according to use of the production technology information.

0111 Further, the management system 1 according to this embodiment is configured such that the user is not permitted to use the machine tool 101 when the permissibility judgment part 15 of the management device 10 confirms an improper use in the usage history of the user and/or confirms that a settlement remains undone; therefore, proper operation of the system and increased safety can be achieved.

0112 Hereinbefore, one embodiment of the present invention has been described. However, the present invention is not limited to the above embodiment and can be implemented in other modes.

0113 For example, the above embodiment is configured such that user registration is executed. However, the present invention is not necessarily limited to such a configuration. As long as the processing of charging the user can be executed without fail and the settlement of the charge can be executed without fail, user registration does not have to be executed.

0114 In the above embodiment, taking into consideration convenience for the user, the machine tool 101 including the additional mechanism is employed and the associated facility 104, the peripheral mechanism 105, the accessory instrument 106, and the sensors 107 are provided. However, these components are only additional components, the machine tool 101 only has to have the basic mechanism 102 and have a configuration which is able to charge the user the use fee according to usage of the machine tool 101.

0115 Further, the above embodiment has a configuration in which the use monitoring device 110 is provided separately from the machine tool 101. However, the present invention is not limited to such a configuration, and a configuration may be employed in which the use monitoring device 110 is incorporated in the controller of the machine tool 101.

### Reference Signs List

0116
- 1: Machine tool management system
- 2: Internet
- 10: Management device
- 11: User registration processing part
- 12: User information storage
- 13: Identification information transmission part
- 14: User information update part
- 15: Permissibility judgment part
- 16: Permissibility transmission part
- 17: Usage information receiving part
- 18: Use fee calculation part
- 19: Use fee unit price storage
- 20: Settlement processing part
- 21: Sensor information receiving part
- 22: Sensor information storage
- 23: Abnormality judgment part
- 24: Abnormal signal transmission part
- 25: Operational information receiving part
- 26: Information analysis part
- 27: Production technology information storage
- 28: Production technology request receiving part
- 29: Production technology information transmission part
- 101: Machine tool
- 102: Basic mechanism
- 103: Additional mechanism
- 104: Associated facility and function
- 105: Peripheral mechanism
- 106: Accessory instrument
- 107: Sensors
- 110: Use monitoring device
- 111: Use permission request part
- 112: Use permission processing part
- 113: User registration application part
- 114: Identification information display part
- 115: Settlement processing part
- 116: Usage information obtaining part
- 117: Usage information storage
- 118: Usage information transmission part
- 119: Sensor information obtaining part
- 120: Sensor information storage
- 121: Sensor information transmission part
- 122: Operational information obtaining part
- 123: Operational information storage
- 124: Operational information transmission part
- 125: Production technology information request part
- 126: Production technology information display part
- 127: Abnormal signal receiving part
- 128: Abnormality display part

## Claims

1. A machine tool management system (1), comprising:
at least one machine tool (101) having attached thereto a use monitoring device (110) having a communication function for connecting to Internet (2), the machine tool (101) being disposed at a location available to a specified or unspecified user; and
a management device (10) connecting to the Internet (2) and communicating with the use monitoring device (110),
the use monitoring device (110) including:
a usage information obtaining part (116) obtaining information on usage of the machine tool (101); and
a usage information transmission part (118) transmitting the information on the usage of the machine tool (101) obtained by the usage information obtaining part (116) to the management device (10);
the management device (10) including:
a use fee calculation part (18) calculating, as a use fee, a cost corresponding to the usage of the machine tool (101) received from the use monitoring device (110); and
a settlement processing part (20) executing a processing of charging the use fee calculated by the use fee calculation part (18) to the user, **characterized in that**:
the machine tool (101) includes a basic mechanism (102), and includes, as associated facility and function (104) to be used in machining performed with the machine tool (101), one or more selected from among an automatic programming apparatus, an interactive programming apparatus, a special cycle function, a tool measurement system, and a workpiece measurement system;
the usage information obtaining part (116) of the use monitoring device (110) is configured to obtain information on usage of the associated facility and function (104) as the information on the usage of the machine tool (101) from the associated facility and function (104);
the usage information transmission part (118) of the use monitoring device (110) is configured to transmit the information on the usage of the machine tool (101) inclusive of the information on the usage of the associated facility and function (104) obtained by the usage information obtaining part (116) to the management device (10);
the use fee calculation part (18) of the management device (10) is configured to calculate the use fee inclusive of a cost corresponding to the usage of the associated facility and function (104) received from the use monitoring device (110); and
the use monitoring device (110) further includes a settlement processing part (115) executing the processing of charging the use fee to the user in cooperation with the settlement processing part (20) of the management device (10).

2. A machine tool management system (1), comprising:
at least one machine tool (101) having attached thereto a use monitoring device (110) having a communication function for connecting to Internet (2), the machine tool (101) being disposed at a location available to a specified or unspecified user; and
a management device (10) connecting to the Internet (2) and communicating with the use monitoring device (110),
the use monitoring device (110) including:
a usage information obtaining part (116) obtaining information on usage of the machine tool (101); and
a usage information transmission part (118) transmitting the information on the usage of the machine tool (101) obtained by the usage information obtaining part (116) to the management device (10);
the management device (10) including:
a use fee calculation part (18) calculating, as a use fee, a cost corresponding to the usage of the machine tool (101) received from the use monitoring device (110); and
a settlement processing part (20) executing a processing of charging the use fee calculated by the use fee calculation part (18) to the user, **characterized in that**:
the machine tool (101) includes a turning mechanism as a basic mechanism (102) and includes, as an additional mechanism (103), one or more mechanisms selected from among a tailstock mechanism, a steady rest mechanism, a milling mechanism, second and subsequent tool rests, second and subsequent spindle mechanisms, and a coolant mechanism;
the usage information obtaining part (116) of the use monitoring device (110) is configured to obtain information on usage of the additional mechanism (103) as the information on the usage of the machine tool (101) from the additional mechanism (103);
the usage information transmission part (118) of the use monitoring device (110) is configured to transmit the information on the usage of the machine tool (101) inclusive of the information on the usage of the additional mechanism (103) obtained by the usage information obtaining part (116) to the management device (10);
the use fee calculation part (18) of the management device (10) is configured to calculate the use fee inclusive of a cost corresponding to the usage of the additional mechanism (103) received from the use monitoring device (110); and
the use monitoring device (110) further includes a settlement processing part (115) executing the processing of charging the use fee to the user in cooperation with the settlement processing part (20) of the management device (10).

3. A machine tool management system (1), comprising:
at least one machine tool (101) having attached thereto a use monitoring device (110) having a communication function for connecting to Internet (2), the machine tool (101) being disposed at a location available to a specified or unspecified user; and
a management device (10) connecting to the Internet (2) and communicating with the use monitoring device (110);
the use monitoring device (110) including:
a usage information obtaining part (116) obtaining information on usage of the machine tool (101); and
a usage information transmission part (118) transmitting the information on the usage of the machine tool (101) obtained by the usage information obtaining part (116) to the management device (10),
the management device (10) including:
a use fee calculation part (18) calculating, as a use fee, a cost corresponding to the usage of the machine tool (101) received from the use monitoring device (110); and
a settlement processing part (20) executing a processing of charging the use fee calculated by the use fee calculation part (18) to the user, **characterized in that**:
the machine tool (101) includes a milling mechanism as a basic mechanism (102) and includes, as an additional mechanism (103), one or more mechanisms selected from among a rotating shaft other than a tool spindle, a mechanism associated with a U-shaft of the tool spindle, a workpiece clamping mechanism, and a coolant mechanism;
the usage information obtaining part (116) of the use monitoring device (110) is configured to obtain information on usage of the additional mechanism (103) as the information on the usage of the machine tool (101) from the additional mechanism (103);
the usage information transmission part (118) of the use monitoring device (110) is configured to transmit the information on the usage of the machine tool (101) inclusive of the information on the usage of the additional mechanism (103) obtained by the usage information obtaining part (116) to the management device (10);
the use fee calculation part (18) of the management device (10) is configured to calculate the use fee inclusive of a cost corresponding to the usage of the additional mechanism (103) received from the use monitoring device (110); and
the use monitoring device (110) further includes a settlement processing part (115) executing the processing of charging the use fee to the user in cooperation with the settlement processing part (20) of the management device (10).

4. A machine tool management system (1), comprising:
at least one machine tool (101) having attached thereto a use monitoring device (110) having a communication function for connecting to Internet (2), the machine tool (101) being disposed at a location available to a specified or unspecified user; and
a management device (10) connecting to the Internet (2) and communicating with the use monitoring device (110),
the use monitoring device (110) including:
a usage information obtaining part (116) obtaining information on usage of the machine tool (101); and
a usage information transmission part (118) transmitting the information on the usage of the machine tool (101) obtained by the usage information obtaining part (116) to the management device (10),
the management device (10) including:
a use fee calculation part (18) calculating, as a use fee, a cost corresponding to the usage of the machine tool (101) received from the use monitoring device (110); and
a settlement processing part (20) executing a processing of charging the use fee calculated by the use fee calculation part (18) to the user, **characterized in that**:
the machine tool (101) includes a main mechanism performing machining, and includes, as a peripheral mechanism (105) provided around the main mechanism, one or more selected from among a robot and a workpiece loading/unloading apparatus; the usage information obtaining part (116) of the use monitoring device (110) is configured to obtain information on usage of the peripheral mechanism (105) as the information on the usage of the machine tool (101) from the peripheral mechanism (105);
the usage information transmission part (118) of the use monitoring device (110) is configured to transmit the information on the usage of the machine tool (101) inclusive of the information on the usage of the peripheral mechanism (105) obtained by the usage information obtaining part (116) to the management device (10);
the use fee calculation part (18) of the management device (10) is configured to calculate the use fee inclusive of a cost corresponding to the usage of the peripheral mechanism (105) received from the use monitoring device (110); and
the use monitoring device (110) further includes a settlement processing part (115) executing the processing of charging the use fee to the user in cooperation with the settlement processing part (20) of the management device (10).

5. A machine tool management system (1), comprising:
at least one machine tool (101) having attached thereto a use monitoring device (110) having a communication function for connecting to Internet (2), the machine tool (101) being disposed at a location available to a specified or unspecified user; and
a management device (10) connecting to the Internet (2) and communicating with the use monitoring device (110),
the use monitoring device (110) including:
a usage information obtaining part (116) obtaining information on usage of the machine tool (101); and
a usage information transmission part (118) transmitting the information on the usage of the machine tool (101) obtained by the usage information obtaining part (116) to the management device (10),
the management device (10) including:
a use fee calculation part (18) calculating, as a use fee, a cost corresponding to the usage of the machine tool (101) received from the use monitoring device (110); and
a settlement processing part (20) executing a processing of charging the use fee calculated by the use fee calculation part (18) to the user, **characterized in that**:
one or more selected from among a chuck, a soft jaw, a tool holder, a throw-away tip, and a detachable measurement instrument, as an accessory instrument (106) to be used in machining performed with the machine tool (101), is provided around the machine tool (101);
the use monitoring device (110) further includes a use permission request part (111) for requesting permission to use the accessory instrument (106);
the usage information obtaining part (116) of the use monitoring device (110) is configured to obtain information on usage of the accessory instrument (106) corresponding to usage particulars of the accessory instrument (106) input in the use permission request part (111), as the information on the usage of the machine tool (101);
the usage information transmission part (118) of the use monitoring device (110) is configured to transmit the information on the usage of the machine tool (101) inclusive of the information on the usage of the accessory instrument (106) obtained by the usage information obtaining part (116) to the management device (10);
the use fee calculation part (18) of the management device (10) is configured to calculate the use fee inclusive of a cost corresponding to the usage of the accessory instrument (106) received from the use monitoring device (110); and
the use monitoring device (110) further includes a settlement processing part (115) executing the processing of charging the use fee to the user in cooperation with the settlement processing part (20) of the management device (10).

6. The machine tool management system (1) according to any one of claims 1 to 5, **characterized in that**:
the use monitoring device (110) includes a user registration application part (113) for executing a processing of registering the user in the management device (10); and
the management device (10) incudes:
a user registration processing part (11) accepting a registration application from the user registration application part (113) and executing a registration processing for the user; and
an identification information transmission part (13) executing a processing of transmitting identification information for the user registered by the user registration processing part (11) to the use monitoring device (110).

7. The machine tool management system (1) according to any one of claims 1 to 6, **characterized in that**:
the machine tool (101) has provided therein various sensors (107) each detecting a status of the machine tool (101);
the usage information obtaining part (116) of the use monitoring device (110) is configured to obtain information obtained from the various sensors (107), as the information on the usage of the machine tool (101); and
the usage information transmission part (118) of the use monitoring device (110) is configured to transmit the information on the usage of the machine tool (101) inclusive of the information obtained from the various sensors (107) obtained by the information obtaining part (116) to the management device (10).

8. The machine tool management system (1) according to any one of claims 1 to 6, **characterized in that**:
the machine tool (101) has provided therein various sensors (107) each detecting a status of the machine tool (101);
the use monitoring device (110) includes:
a sensor information obtaining part (119) obtaining output data of the various sensors (107); and
a sensor information transmission part (121) transmitting the output data of the various sensors (107) obtained by the sensor information obtaining part (119) to the management deice (10);
the management device (10) includes:
an abnormality judgment part (23) analyzing the output data of the various sensors (107) received from the sensor information transmission part (121) of the use monitoring device (110) and determining whether the machine tool (101) has an abnormality or whether the machine tool (101) is predicted to fall into a state of having an abnormality; and
an abnormal signal transmission part (24) transmitting, when it is determined by the abnormality judgment part (23) that the machine tool (101) has an abnormality or that the machine tool (101) is predicted to fall into the state of having an abnormality, a signal relating to the abnormality to the use monitoring device (110).

9. The machine tool management system (1) according to any one of claims 1 to 8, **characterized in that**:
the use monitoring device (110) includes:
an operational information obtaining part (122) obtaining, as data on an operational status, one or more selected from among cutting speed data, feed speed data, workpiece material data, tool material data, spindle rotation speed data, and tool life data, from the machine tool (101); and
an operational information transmission part (124) transmitting information on the obtained operational status to the management device (10); and
the management device (10) includes:
an information analysis part (26) analyzing the data on the operational status received from the operational information transmission part (124) to extract production technology information; and
an production technology information storage (27) storing the production technology information extracted by the information analysis part (26).

10. The machine tool management system (1) according to claim 9, **characterized in that**:
the use monitoring device (110) includes a production technology information request part (125) executing a processing of requesting permission from the management device (10) to use the production technology information stored in the production technology information storage (27);
the management device (10) includes a production technology information transmission part (29) transmitting the production technology information stored in the production technology information storage (27) to the use monitoring device (110) in response to request from the production technology information request part (125); and
the use fee calculation part (18) of the management device (10) is configured to calculate the use fee for the machine tool (101) according to use/non-use of the production technology information.

11. The machine tool management system (1) according to any one of claims 1 to 10, **characterized in that**:
the machine tool (101) is disposed at a location available to an unspecified user;
the use monitoring device (110) further includes:
a use permission request part (111) executing a processing of requesting permission from the management device (10) to use the machine tool (101); and
a use permission processing part (112) executing, when obtaining the permission from the management device (10), a processing of making the machine tool (101) operational; and
the management device (10) further includes:
a permissibility judgment part (15) executing, when receiving a signal requesting permission to use the machine tool (101) from the use permission request part (111) of the use monitoring device (110), a processing of recognizing the user and judging permissibility; and
a permissibility transmission part (16) executing a processing of transmitting a result of the judgment by the permissibility judgment part (15) to the use monitoring device (110).

## Patentansprüche

1. Werkzeugmaschinen-Managementsystem (1), umfassend:
mindestens eine Werkzeugmaschine (101), an der eine Nutzungsüberwachungsvorrichtung (110) angebracht ist, die eine Kommunikationsfunktion zum Verbinden mit dem Internet (2) aufweist, wobei die Werkzeugmaschine (101) an einem Ort angeordnet ist, der einem spezifizierten oder unspezifizierten Nutzer zur Verfügung steht; und
eine Managementvorrichtung (10), die mit dem Internet (2) verbunden ist und mit der Nutzungsüberwachungsvorrichtung (110) kommuniziert,
wobei die Nutzungsüberwachungsvorrichtung (110) aufweist:
einen Nutzungsinformationen-Erlangungsteil (116), der Informationen über die Nutzung der Werkzeugmaschine (101) erlangt; und
einen Nutzungsinformationen-Sendeteil (118), der die Informationen über die Nutzung der Werkzeugmaschine (101), die durch den Nutzungsinformationen-Erlangungsteil (116) erlangt wurden, an die Managementvorrichtung (10) sendet;
wobei die Managementvorrichtung (10) aufweist:
einen Nutzungsentgelt-Berechnungsteil (18), der, als ein Nutzungsentgelt, Kosten berechnet, die der Nutzung der Werkzeugmaschine (101) entsprechen, die von der Nutzungsüberwachungsvorrichtung (110) empfangen wird; und
einen Abrechnungsverarbeitungsteil (20), der eine Verarbeitung der Inrechnungstellung des Nutzungsentgelts, das durch den Nutzungsentgelt-Berechnungsteil (18) berechnet wurde, an den Nutzer ausführt, **dadurch gekennzeichnet, dass**:
die Werkzeugmaschine (101) einen Basismechanismus (102) aufweist und, als zugehörige Einrichtung und Funktion (104), die bei der mit der Werkzeugmaschine (101) durchgeführten Bearbeitung zu verwenden ist, eines oder mehrere aufweist, die aus einer automatischen Programmiervorrichtung, einer interaktiven Programmiervorrichtung, einer speziellen Zyklusfunktion, einem Werkzeugmesssystem und einem Werkstückmesssystem ausgewählt sind;
der Nutzungsinformationen-Erlangungsteil (116) der Nutzungsüberwachungsvorrichtung (110) dazu eingerichtet ist, Informationen über die Nutzung der zugehörigen Einrichtung und Funktion (104) als die Informationen über die Nutzung der Werkzeugmaschine (101) von der zugehörigen Einrichtung und Funktion (104) zu erlangen;
der Nutzungsinformationen-Sendeteil (118) der Nutzungsüberwachungsvorrichtung (110) dazu eingerichtet ist, die Informationen über die Nutzung der Werkzeugmaschine (101) einschließlich der Informationen über die Nutzung der zugehörigen Einrichtung und Funktion (104), die durch den Nutzungsinformationen-Erlangungsteil (116) erlangt wurden, an die Managementvorrichtung (10) zu senden;
der Nutzungsentgelt-Berechnungsteil (18) der Managementvorrichtung (10) dazu eingerichtet ist, das Nutzungsentgelt einschließlich der Kosten zu berechnen, die der Nutzung der zugehörigen Einrichtung und Funktion (104) entsprechen, die von der Nutzungsüberwachungsvorrichtung (110) empfangen wird; und
die Nutzungsüberwachungsvorrichtung (110) des Weiteren einen Abrechnungsverarbeitungsteil (115) aufweist, der die Verarbeitung der Inrechnungstellung des Nutzungsentgelts an den Nutzer im Zusammenwirken mit dem Abrechnungsverarbeitungsteil (20) der Managementvorrichtung (10) ausführt.

2. Werkzeugmaschinen-Managementsystem (1), umfassend:
mindestens eine Werkzeugmaschine (101), an der eine Nutzungsüberwachungsvorrichtung (110) angebracht ist, die eine Kommunikationsfunktion zum Verbinden mit dem Internet (2) aufweist, wobei die Werkzeugmaschine (101) an einem Ort angeordnet ist, der einem spezifizierten oder unspezifizierten Nutzer zur Verfügung steht; und
eine Managementvorrichtung (10), die mit dem Internet (2) verbunden ist und mit der Nutzungsüberwachungsvorrichtung (110) kommuniziert,
wobei die Nutzungsüberwachungsvorrichtung (110) aufweist:
einen Nutzungsinformationen-Erlangungsteil (116), der Informationen über die Nutzung der Werkzeugmaschine (101) erlangt; und
einen Nutzungsinformationen-Sendeteil (118), der die Informationen über die Nutzung der Werkzeugmaschine (101), die durch den Nutzungsinformationen-Erlangungsteil (116) erlangt wurden, an die Managementvorrichtung (10) sendet;
wobei die Managementvorrichtung (10) aufweist:
einen Nutzungsentgelt-Berechnungsteil (18), der, als ein Nutzungsentgelt, Kosten berechnet, die der Nutzung der Werkzeugmaschine (101) entsprechen, die von der Nutzungsüberwachungsvorrichtung (110) empfangen wird; und
einen Abrechnungsverarbeitungsteil (20), der eine Verarbeitung der Inrechnungstellung des Nutzungsentgelts, das durch den Nutzungsentgelt-Berechnungsteil (18) berechnet wurde, an den Nutzer ausführt, **dadurch gekennzeichnet, dass**:
die Werkzeugmaschine (101) einen Drehmechanismus als einen Basismechanismus (102) aufweist und, als einen Zusatzmechanismus (103), einen oder mehrere Mechanismen aufweist, die aus einem Reitstockmechanismus, einem Setzstockmechanismus, einem Fräsmechanismus, zweiten und anschließenden Werkzeugauflagen, zweiten und anschließenden Spindelmechanismen und einem Kühlmittelmechanismus ausgewählt sind;
der Nutzungsinformationen-Erlangungsteil (116) der Nutzungsüberwachungsvorrichtung (110) dazu eingerichtet ist, Informationen über die Nutzung des zusätzlichen Mechanismus (103) als die Informationen über die Nutzung der Werkzeugmaschine (101) von dem zusätzlichen Mechanismus (103) zu erlangen;
der Nutzungsinformationen-Sendeteil (118) der Nutzungsüberwachungsvorrichtung (110) dazu eingerichtet ist, die Informationen über die Nutzung der Werkzeugmaschine (101) einschließlich der Informationen über die Nutzung des zusätzlichen Mechanismus (103), die durch den Nutzungsinformationen-Erlangungsteil (116) erlangt werden, an die Managementvorrichtung (10) zu senden;
der Nutzungsentgelt-Berechnungsteil (18) der Managementvorrichtung (10) dazu eingerichtet ist, das Nutzungsentgelt einschließlich der Kosten zu berechnen, die der Nutzung des zusätzlichen Mechanismus (103) entsprechen, die von der Nutzungsüberwachungsvorrichtung (110) empfangen wird; und
die Nutzungsüberwachungsvorrichtung (110) des Weiteren einen Abrechnungsverarbeitungsteil (115) aufweist, der die Verarbeitung der Inrechnungstellung des Nutzungsentgelts an den Nutzer im Zusammenwirken mit dem Abrechnungsverarbeitungsteil (20) der Managementvorrichtung (10) ausführt.

3. Werkzeugmaschinen-Managementsystem (1), umfassend:
mindestens eine Werkzeugmaschine (101), an der eine Nutzungsüberwachungsvorrichtung (110) angebracht ist, die eine Kommunikationsfunktion zum Verbinden mit dem Internet (2) aufweist, wobei die Werkzeugmaschine (101) an einem Ort angeordnet ist, der einem spezifizierten oder unspezifizierten Nutzer zur Verfügung steht; und
eine Managementvorrichtung (10), die mit dem Internet (2) verbunden ist und mit der Nutzungsüberwachungsvorrichtung (110) kommuniziert;
wobei die Nutzungsüberwachungsvorrichtung (110) aufweist:
einen Nutzungsinformationen-Erlangungsteil (116), der Informationen über die Nutzung der Werkzeugmaschine (101) erlangt; und
einen Nutzungsinformationen-Sendeteil (118), der die Informationen über die Nutzung der Werkzeugmaschine (101), die durch den Nutzungsinformationen-Erlangungsteil (116) erlangt wurden, an die Managementvorrichtung (10) sendet,
wobei die Managementvorrichtung (10) aufweist:
einen Nutzungsentgelt-Berechnungsteil (18), der, als ein Nutzungsentgelt, Kosten berechnet, die der Nutzung der Werkzeugmaschine (101) entsprechen, die von der Nutzungsüberwachungsvorrichtung (110) empfangen wird; und
einen Abrechnungsverarbeitungsteil (20), der eine Verarbeitung der Inrechnungstellung des Nutzungsentgelts, das durch den Nutzungsentgelt-Berechnungsteil (18) berechnet wurde, an den Nutzer ausführt, **dadurch gekennzeichnet, dass**:
die Werkzeugmaschine (101) einen Fräsmechanismus als einen Basismechanismus (102) aufweist und, als einen zusätzlichen Mechanismus (103), einen oder mehrere Mechanismen aufweist, die aus einer rotierenden Welle, die keine Werkzeugspindel ist, einem Mechanismus, der einer U-Welle der Werkzeugspindel zugeordnet ist, einem Werkstückspannmechanismus und einem Kühlmittelmechanismus ausgewählt sind;
der Nutzungsinformationen-Erlangungsteil (116) der Nutzungsüberwachungsvorrichtung (110) dazu eingerichtet ist, Informationen über die Nutzung des zusätzlichen Mechanismus (103) als die Informationen über die Nutzung der Werkzeugmaschine (101) von dem zusätzlichen Mechanismus (103) zu erlangen;
der Nutzungsinformationen-Sendeteil (118) der Nutzungsüberwachungsvorrichtung (110) dazu eingerichtet ist, die Informationen über die Nutzung der Werkzeugmaschine (101) einschließlich der Informationen über die Nutzung des zusätzlichen Mechanismus (103), die durch den Nutzungsinformationen-Erlangungsteil (116) erlangt werden, an die Managementvorrichtung (10) zu senden;
der Nutzungsentgelt-Berechnungsteil (18) der Managementvorrichtung (10) dazu eingerichtet ist, das Nutzungsentgelt einschließlich der Kosten zu berechnen, die der Nutzung des zusätzlichen Mechanismus (103) entsprechen, die von der Nutzungsüberwachungsvorrichtung (110) empfangen wird; und
die Nutzungsüberwachungsvorrichtung (110) des Weiteren einen Abrechnungsverarbeitungsteil (115) aufweist, der die Verarbeitung der Inrechnungstellung des Nutzungsentgelts an den Nutzer im Zusammenwirken mit dem Abrechnungsverarbeitungsteil (20) der Managementvorrichtung (10) ausführt.

4. Werkzeugmaschinen-Managementsystem (1), umfassend:
mindestens eine Werkzeugmaschine (101), an der eine Nutzungsüberwachungsvorrichtung (110) angebracht ist, die eine Kommunikationsfunktion zum Verbinden mit dem Internet (2) aufweist, wobei die Werkzeugmaschine (101) an einem Ort angeordnet ist, der einem spezifizierten oder unspezifizierten Nutzer zur Verfügung steht; und
eine Managementvorrichtung (10), die mit dem Internet (2) verbunden ist und mit der Nutzungsüberwachungsvorrichtung (110) kommuniziert,
wobei die Nutzungsüberwachungsvorrichtung (110) aufweist:
einen Nutzungsinformationen-Erlangungsteil (116), der Informationen über die Nutzung der Werkzeugmaschine (101) erlangt; und
einen Nutzungsinformationen-Sendeteil (118), der die Informationen über die Nutzung der Werkzeugmaschine (101), die durch den Nutzungsinformationen-Erlangungsteil (116) erlangt wurden, an die Managementvorrichtung (10) sendet,
wobei die Managementvorrichtung (10) aufweist:
einen Nutzungsentgelt-Berechnungsteil (18), der, als ein Nutzungsentgelt, Kosten berechnet, die der Nutzung der Werkzeugmaschine (101) entsprechen, die von der Nutzungsüberwachungsvorrichtung (110) empfangen wird; und
einen Abrechnungsverarbeitungsteil (20), der eine Verarbeitung der Inrechnungstellung des Nutzungsentgelts, das durch den Nutzungsentgelt-Berechnungsteil (18) berechnet wurde, an den Nutzer ausführt, **dadurch gekennzeichnet, dass**:
die Werkzeugmaschine (101) einen Hauptmechanismus aufweist, der eine Bearbeitung durchführt, und, als einen peripheren Mechanismus (105), der um den Hauptmechanismus herum bereitgestellt ist, eines oder mehrere aufweist, die aus einem Roboter und einer Werkstücklade-/-entladevorrichtung ausgewählt sind;
der Nutzungsinformationen-Erlangungsteil (116) der Nutzungsüberwachungsvorrichtung (110) dazu eingerichtet ist, Informationen über die Nutzung des peripheren Mechanismus (105) als die Informationen über die Nutzung der Werkzeugmaschine (101) von dem peripheren Mechanismus (105) zu erlangen;
der Nutzungsinformationen-Sendeteil (118) der Nutzungsüberwachungsvorrichtung (110) dazu eingerichtet ist, die Informationen über die Nutzung der Werkzeugmaschine (101) einschließlich der Informationen über die Nutzung des peripheren Mechanismus (105), die durch den Nutzungsinformationen-Erlangungsteil (116) erlangt werden, an die Managementvorrichtung (10) zu senden;
der Nutzungsentgelt-Berechnungsteil (18) der Managementvorrichtung (10) dazu eingerichtet ist, das Nutzungsentgelt einschließlich der Kosten zu berechnen, die der Nutzung des peripheren Mechanismus (105) entsprechen, die von der Nutzungsüberwachungsvorrichtung (110) empfangen wird; und
die Nutzungsüberwachungsvorrichtung (110) des Weiteren einen Abrechnungsverarbeitungsteil (115) aufweist, der die Verarbeitung der Inrechnungstellung des Nutzungsentgelts an den Nutzer im Zusammenwirken mit dem Abrechnungsverarbeitungsteil (20) der Managementvorrichtung (10) ausführt.

5. Werkzeugmaschinen-Managementsystem (1), umfassend:
mindestens eine Werkzeugmaschine (101), an der eine Nutzungsüberwachungsvorrichtung (110) angebracht ist, die eine Kommunikationsfunktion zum Verbinden mit dem Internet (2) aufweist, wobei die Werkzeugmaschine (101) an einem Ort angeordnet ist, der einem spezifizierten oder unspezifizierten Nutzer zur Verfügung steht; und
eine Managementvorrichtung (10), die mit dem Internet (2) verbunden ist und mit der Nutzungsüberwachungsvorrichtung (110) kommuniziert,
wobei die Nutzungsüberwachungsvorrichtung (110) aufweist:
einen Nutzungsinformationen-Erlangungsteil (116), der Informationen über die Nutzung der Werkzeugmaschine (101) erlangt; und
einen Nutzungsinformationen-Sendeteil (118), der die Informationen über die Nutzung der Werkzeugmaschine (101), die durch den Nutzungsinformationen-Erlangungsteil (116) erlangt wurden, an die Managementvorrichtung (10) sendet,
wobei die Managementvorrichtung (10) aufweist:
einen Nutzungsentgelt-Berechnungsteil (18), der, als ein Nutzungsentgelt, Kosten berechnet, die der Nutzung der Werkzeugmaschine (101) entsprechen, die von der Nutzungsüberwachungsvorrichtung (110) empfangen wird; und
einen Abrechnungsverarbeitungsteil (20), der eine Verarbeitung der Inrechnungstellung des Nutzungsentgelts, das durch den Nutzungsentgelt-Berechnungsteil (18) berechnet wurde, an den Nutzer ausführt, **dadurch gekennzeichnet, dass**:
eines oder mehrere, die aus einem Spannfutter, einem weichen Klemmbacken, einem Werkzeughalter, einer Wegwerfspitze und einem abnehmbaren Messinstrument ausgewählt sind, als ein Zubehörinstrument (106), das bei der mit der Werkzeugmaschine (101) durchgeführten Bearbeitung zu verwenden ist, um die Werkzeugmaschine (101) herum bereitgestellt sind;
die Nutzungsüberwachungsvorrichtung (110) des Weiteren einen Nutzungserlaubnis-Anforderungsteil (111) zum Anfordern einer Erlaubnis zur Nutzung des Zubehörinstruments (106) aufweist;
der Nutzungsinformationen-Erlangungsteil (116) der Nutzungsüberwachungsvorrichtung (110) dazu eingerichtet ist, Informationen über die Nutzung des Zubehörinstruments (106), die in den Nutzungserlaubnis-Anforderungsteil (111) eingegebenen Nutzungsangaben des Zubehörinstruments (106) entsprechen, als die Informationen über die Nutzung der Werkzeugmaschine (101) zu erlangen;
der Nutzungsinformationen-Sendeteil (118) der Nutzungsüberwachungsvorrichtung (110) dazu eingerichtet ist, die Informationen über die Nutzung der Werkzeugmaschine (101) einschließlich der Informationen über die Nutzung des Zubehörinstruments (106), die durch den Nutzungsinformationen-Erlangungsteil (116) erlangt werden, an die Managementvorrichtung (10) zu senden;
der Nutzungsentgelt-Berechnungsteil (18) der Managementvorrichtung (10) dazu eingerichtet ist, das Nutzungsentgelt einschließlich der Kosten zu berechnen, die der Nutzung des Zubehörinstruments (106) entsprechen, die von der Nutzungsüberwachungsvorrichtung (110) empfangen wird; und
die Nutzungsüberwachungsvorrichtung (110) des Weiteren einen Abrechnungsverarbeitungsteil (115) aufweist, der die Verarbeitung der Inrechnungstellung des Nutzungsentgelts an den Nutzer im Zusammenwirken mit dem Abrechnungsverarbeitungsteil (20) der Managementvorrichtung (10) ausführt.

6. Werkzeugmaschinen-Managementsystem (1) nach einem der Ansprüche 1 bis 5, **dadurch gekennzeichnet, dass**:
die Nutzungsüberwachungsvorrichtung (110) einen Nutzerregistrierungs-Beantragungsteil (113) zum Ausführen einer Verarbeitung des Registrierens des Nutzers in der Managementvorrichtung (10) aufweist; und
wobei die Managementvorrichtung (10) aufweist:
einen Nutzerregistrierungs-Verarbeitungsteil (11), der eine Registrierungsbeantragung von dem Nutzerregistrierungs-Beantragungsteil (113) entgegennimmt und eine Registrierungsverarbeitung für den Nutzer ausführt; und
einen Identifikationsinformationen-Sendeteil (13), der eine Verarbeitung des Sendens von Identifikationsinformationen für den durch den Nutzerregistrierungs-Verarbeitungsteil (11) registrierten Nutzer an die Nutzungsüberwachungsvorrichtung (110) ausführt.

7. Werkzeugmaschinen-Managementsystem (1) nach einem der Ansprüche 1 bis 6, **dadurch gekennzeichnet, dass**:
in der Werkzeugmaschine (101) verschiedene Sensoren (107) bereitgestellt sind, die jeweils einen Zustand der Werkzeugmaschine (101) detektieren;
der Nutzungsinformationen-Erlangungsteil (116) der Nutzungsüberwachungsvorrichtung (110) dazu eingerichtet ist, von den verschiedenen Sensoren (107) erlangte Informationen als die Informationen über die Nutzung der Werkzeugmaschine (101) zu erlangen; und
der Nutzungsinformationen-Sendeteil (118) der Nutzungsüberwachungsvorrichtung (110) dazu eingerichtet ist, die Informationen über die Nutzung der Werkzeugmaschine (101) einschließlich der von den verschiedenen Sensoren (107) erlangten Informationen, die durch den Nutzungsinformationen-Erlangungsteil (116) erlangt werden, an die Managementvorrichtung (10) zu senden.

8. Werkzeugmaschinen-Managementsystem (1) nach einem der Ansprüche 1 bis 6, **dadurch gekennzeichnet, dass**:
in der Werkzeugmaschine (101) verschiedene Sensoren (107) bereitgestellt sind, die jeweils einen Zustand der Werkzeugmaschine (101) detektieren;
die Nutzungsüberwachungsvorrichtung (110) aufweist:
einen Sensorinformationen-Erlangungsteil (119), der Ausgabedaten der verschiedenen Sensoren (107) erlangt; und
einen Sensorinformationen-Sendeteil (121), der die Ausgabedaten der verschiedenen Sensoren (107), die durch den Sensorinformationen-Erlangungsteil (119) erlangt wurden, an die Managementvorrichtung (10) sendet,
die Managementvorrichtung (10) aufweist:
einen Anomaliebeurteilungsteil (23), der die Ausgabedaten der verschiedenen Sensoren (107), die von dem Sensorinformationen-Sendeteil (121) der Nutzungsüberwachungsvorrichtung (110) empfangen werden, analysiert und bestimmt, ob die Werkzeugmaschine (101) eine Anomalie aufweist oder ob vorhergesagt wird, dass die Werkzeugmaschine (101) in einen Zustand fällt, in dem sie eine Anomalie aufweist; und
einen Anomaliesignal-Sendeteil (24), der, wenn durch den Anomaliebeurteilungsteil (23) bestimmt wird, dass die Werkzeugmaschine (101) eine Anomalie aufweist oder dass vorhergesagt wird, dass die Werkzeugmaschine (101) in den Zustand fällt, in dem sie eine Anomalie aufweist, ein Signal bezüglich der Anomalie an die Nutzungsüberwachungsvorrichtung (110) sendet.

9. Werkzeugmaschinen-Managementsystem (1) nach einem der Ansprüche 1 bis 8, **dadurch gekennzeichnet, dass**:
die Nutzungsüberwachungsvorrichtung (110) aufweist:
einen Betriebsinformationen-Erlangungsteil (122), der, als Daten über einen Betriebszustand, eines oder mehrere erlangt, die aus Schnittgeschwindigkeitsdaten, Vorschubgeschwindigkeitsdaten, Werkstückmaterialdaten, Werkzeugmaterialdaten, Spindeldrehzahldaten und Werkzeugstandzeitdaten von der Werkzeugmaschine (101) ausgewählt sind; und
einen Betriebsinformationen-Sendeteil (124), der Informationen über den erlangten Betriebsstatus an die Managementvorrichtung (10) sendet; und
die Managementvorrichtung (10) aufweist:
einen Informationen-Analyseteil (26), der die von dem Betriebsinformationen-Sendeteil (124) empfangenen Daten über den Betriebszustand analysiert, um Produktionstechnikinformationen zu extrahieren; und
einen Produktionstechnikinformationen-Speicher (27), der die durch den Informationen-Analyseteil (26) extrahierten Produktionstechnikinformationen speichert.

10. Werkzeugmaschinen-Managementsystem (1) nach Anspruch 9, **dadurch gekennzeichnet, dass**:
die Nutzungsüberwachungsvorrichtung (110) einen Produktionstechnikinformationen-Anforderungsteil (125) aufweist, der eine Verarbeitung des Anforderns einer Erlaubnis von der Managementvorrichtung (10) ausführt, um die in dem Produktionstechnikinformationen-Speicher (27) gespeicherten Produktionstechnikinformationen zu verwenden;
die Managementvorrichtung (10) einen Produktionstechnikinformationen-Sendeteil (29) aufweist, der die in dem Produktionstechnikinformationen-Speicher (27) gespeicherten Produktionstechnikinformationen in Reaktion auf eine Anforderung von dem Produktionstechnikinformationen-Anforderungsteil (125) an die Nutzungsüberwachungsvorrichtung (110) sendet; und
der Nutzungsentgelt-Berechnungsteil (18) der Managementvorrichtung (10) dazu eingerichtet ist, das Nutzungsentgelt für die Werkzeugmaschine (101) gemäß der Nutzung/Nichtnutzung der Produktionstechnikinformationen zu berechnen.

11. Werkzeugmaschinen-Managementsystem (1) nach einem der Ansprüche 1 bis 10, **dadurch gekennzeichnet, dass**:
sich die Werkzeugmaschine (101) an einem Ort befindet, der einem unspezifizierten Nutzer zur Verfügung steht;
die Nutzungsüberwachungsvorrichtung (110) des Weiteren aufweist:
einen Nutzungserlaubnis-Anforderungsteil (111), der eine Verarbeitung des Anforderns einer Erlaubnis von der Managementvorrichtung (10) zur Nutzung der Werkzeugmaschine (101) ausführt; und
einen Nutzungserlaubnis-Verarbeitungsteil (112), der, wenn er die Erlaubnis von der Managementvorrichtung (10) erlangt, eine Verarbeitung ausführt, um die Werkzeugmaschine (101) betriebsbereit zu machen; und
die Managementvorrichtung (10) des Weiteren aufweist:
einen Erlaubnisfähigkeits-Beurteilungsteil (15), der, wenn er ein Signal empfängt, das eine Erlaubnis zur Nutzung der Werkzeugmaschine (101) von dem Nutzungserlaubnis-Anforderungsteil (111) der Nutzungsüberwachungsvorrichtung (110) anfordert, eine Verarbeitung des Erkennens des Nutzers und des Beurteilens der Erlaubnisfähigkeit ausführt; und
einen Erlaubnisfähigkeits-Sendeteil (16), der eine Verarbeitung des Sendens eines Ergebnisses der Beurteilung durch den Erlaubnisfähigkeits-Beurteilungsteil (15) an die Nutzungsüberwachungsvorrichtung (110) ausführt.

## Revendications

1. Système de gestion de machine-outil (1), comprenant :
au moins une machine-outil (101) à laquelle est attaché un dispositif de contrôle d'utilisation (110) doté d'une fonction de communication pour se connecter à l'Internet (2), la machine-outil (101) étant disposée à un endroit accessible à un utilisateur spécifié ou non spécifié ; et
un dispositif de gestion (10) connecté à l'Internet (2) et communiquant avec le dispositif de contrôle d'utilisation (110),
le dispositif de contrôle d'utilisation (110) incluant :
une partie d'obtention d'information d'utilisation (116) obtenant des informations sur l'utilisation de la machine-outil (101) ; et
une partie de transmission d'informations d'utilisation (118) transmettant les informations sur l'utilisation de la machine-outil (101) obtenues par la partie d'obtention d'informations d'utilisation (116) au dispositif de gestion (10) ;
le dispositif de gestion (10) incluant :
une partie de calcul de frais d'utilisation (18) calculant, en tant que frais d'utilisation, un coût correspondant à l'utilisation de la machine-outil (101) reçu à partir du dispositif de contrôle d'utilisation (110) ; et
une partie de traitement de règlement (20) exécutant un traitement de facturation des frais d'utilisation calculés par la partie de calcul de frais d'utilisation (18) à l'utilisateur, **caractérisé en ce que** :
la machine-outil (101) inclut un mécanisme de base (102) et inclut, en tant qu'équipement et fonction associés (104) à utiliser dans l'usinage effectué avec la machine-outil (101), un ou plusieurs éléments choisis parmi un appareil de programmation automatique, un appareil de programmation interactive, une fonction de cycle spécial, un système de mesure d'outil, et un système de mesure de pièce à usiner ;
la partie d'obtention d'informations d'utilisation (116) du dispositif de contrôle d'utilisation (110) est configurée pour obtenir des informations sur l'utilisation de l'équipement et de la fonction associés (104) en tant qu'informations sur l'utilisation de la machine-outil (101) à partir de l'équipement et de la fonction associés (104) ;
la partie de transmission d'informations d'utilisation (118) du dispositif de contrôle d'utilisation (110) est configurée pour transmettre au dispositif de gestion (10) les informations sur l'utilisation de la machine-outil (101), y compris les informations sur l'utilisation de l'équipement et de la fonction associés (104), obtenues par la partie d'obtention d'informations d'utilisation (116) ;
la partie de calcul de frais d'utilisation (18) du dispositif de gestion (10) est configurée pour calculer les frais d'utilisation incluant un coût correspondant à l'utilisation de l'équipement et de la fonction associés (104), reçu à partir du dispositif de contrôle d'utilisation (110) ; et
le dispositif de contrôle d'utilisation (110) inclut en outre une partie de traitement de règlement (115) exécutant le traitement consistant à facturer les frais d'utilisation à l'utilisateur en coopération avec la partie de traitement de règlement (20) du dispositif de gestion (10).

2. Système de gestion de machine-outil (1), comprenant :
au moins une machine-outil (101) à laquelle est attaché un dispositif de contrôle d'utilisation (110) doté d'une fonction de communication pour se connecter à l'Internet (2), la machine-outil (101) étant disposée à un endroit accessible à un utilisateur spécifié ou non spécifié ; et
un dispositif de gestion (10) connecté à l'Internet (2) et communiquant avec le dispositif de contrôle d'utilisation (110),
le dispositif de contrôle d'utilisation (110) incluant :
une partie d'obtention d'information d'utilisation (116) obtenant des informations sur l'utilisation de la machine-outil (101) ; et
une partie de transmission d'informations d'utilisation (118) transmettant les informations sur l'utilisation de la machine-outil (101) obtenues par la partie d'obtention d'informations d'utilisation (116) au dispositif de gestion (10) ;
le dispositif de gestion (10) incluant :
une partie de calcul de frais d'utilisation (18) calculant, en tant que frais d'utilisation, un coût correspondant à l'utilisation de la machine-outil (101) reçu à partir du dispositif de contrôle d'utilisation (110) ; et
une partie de traitement de règlement (20) exécutant un traitement de facturation des frais d'utilisation calculés par la partie de calcul de frais d'utilisation (18) à l'utilisateur, **caractérisé en ce que** :
la machine-outil (101) inclut un mécanisme de tournage en tant que mécanisme de base (102) et inclut, en tant que mécanisme supplémentaire (103), un ou plusieurs mécanismes choisis parmi un mécanisme de contre-poupée, un mécanisme de lunette, un mécanisme de fraisage, un deuxième et d'autres porte-outils, un deuxième et d'autres mécanismes de broche, et un mécanisme de refroidissement ;
la partie d'obtention d'informations d'utilisation (116) du dispositif de contrôle d'utilisation (110) est configurée pour obtenir des informations sur l'utilisation du mécanisme supplémentaire (103) en tant qu'informations sur l'utilisation de la machine-outil (101) à partir du mécanisme supplémentaire (103) ;
la partie de transmission d'informations d'utilisation (118) du dispositif de contrôle d'utilisation (110) est configurée pour transmettre au dispositif de gestion (10) les informations sur l'utilisation de la machine-outil (101), y compris les informations sur l'utilisation du mécanisme supplémentaire (103), obtenues par la partie d'obtention d'informations d'utilisation (116) ;
la partie de calcul de frais d'utilisation (18) du dispositif de gestion (10) est configurée pour calculer les frais d'utilisation incluant un coût correspondant à l'utilisation du mécanisme supplémentaire (103) reçu à partir du dispositif de contrôle d'utilisation (110) ; et
le dispositif de contrôle d'utilisation (110) inclut en outre une partie de traitement de règlement (115) exécutant le traitement consistant à facturer les frais d'utilisation à l'utilisateur en coopération avec la partie de traitement de règlement (20) du dispositif de gestion (10).

3. Système de gestion de machine-outil (1), comprenant :
au moins une machine-outil (101) à laquelle est attaché un dispositif de contrôle d'utilisation (110) doté d'une fonction de communication pour se connecter à l'Internet (2), la machine-outil (101) étant disposée à un endroit accessible à un utilisateur spécifié ou non spécifié ; et
un dispositif de gestion (10) connecté à l'Internet (2) et communiquant avec le dispositif de contrôle d'utilisation (110),
le dispositif de contrôle d'utilisation (110) incluant :
une partie d'obtention d'information d'utilisation (116) obtenant des informations sur l'utilisation de la machine-outil (101) ; et
une partie de transmission d'informations d'utilisation (118) transmettant les informations sur l'utilisation de la machine-outil (101) obtenues par la partie d'obtention d'informations d'utilisation (116) au dispositif de gestion (10),
le dispositif de gestion (10) incluant :
une partie de calcul de frais d'utilisation (18) calculant, en tant que frais d'utilisation, un coût correspondant à l'utilisation de la machine-outil (101) reçu à partir du dispositif de contrôle d'utilisation (110) ; et
une partie de traitement de règlement (20) exécutant un traitement de facturation des frais d'utilisation calculés par la partie de calcul de frais d'utilisation (18) à l'utilisateur, **caractérisé en ce que** :
la machine-outil (101) inclut un mécanisme de fraisage en tant que mécanisme de base (102) et inclut, en tant que mécanisme supplémentaire (103), un ou plusieurs mécanismes choisis parmi un arbre rotatif autre qu'une broche d'outil, un mécanisme associé à un arbre en U de la broche d'outil, un mécanisme de serrage de la pièce à usiner, et un mécanisme de refroidissement ;
la partie d'obtention d'informations d'utilisation (116) du dispositif de contrôle d'utilisation (110) est configurée pour obtenir des informations sur l'utilisation du mécanisme supplémentaire (103) en tant qu'informations sur l'utilisation de la machine-outil (101) à partir du mécanisme supplémentaire (103) ;
la partie de transmission d'informations d'utilisation (118) du dispositif de contrôle d'utilisation (110) est configurée pour transmettre au dispositif de gestion (10) les informations sur l'utilisation de la machine-outil (101), y compris les informations sur l'utilisation du mécanisme supplémentaire (103), obtenues par la partie d'obtention d'informations d'utilisation (116) ;
la partie de calcul de frais d'utilisation (18) du dispositif de gestion (10) est configurée pour calculer les frais d'utilisation incluant un coût correspondant à l'utilisation du mécanisme supplémentaire (103) reçu à partir du dispositif de contrôle d'utilisation (110) ; et
le dispositif de contrôle d'utilisation (110) inclut en outre une partie de traitement de règlement (115) exécutant le traitement consistant à facturer les frais d'utilisation à l'utilisateur en coopération avec la partie de traitement de règlement (20) du dispositif de gestion (10).

4. Système de gestion de machine-outil (1), comprenant :
au moins une machine-outil (101) à laquelle est attaché un dispositif de contrôle d'utilisation (110) doté d'une fonction de communication pour se connecter à l'Internet (2), la machine-outil (101) étant disposée à un endroit accessible à un utilisateur spécifié ou non spécifié ; et
un dispositif de gestion (10) connecté à l'Internet (2) et communiquant avec le dispositif de contrôle d'utilisation (110),
le dispositif de contrôle d'utilisation (110) incluant :
une partie d'obtention d'information d'utilisation (116) obtenant des informations sur l'utilisation de la machine-outil (101) ; et
une partie de transmission d'informations d'utilisation (118) transmettant les informations sur l'utilisation de la machine-outil (101) obtenues par la partie d'obtention d'informations d'utilisation (116) au dispositif de gestion (10),
le dispositif de gestion (10) incluant :
une partie de calcul de frais d'utilisation (18) calculant, en tant que frais d'utilisation, un coût correspondant à l'utilisation de la machine-outil (101) reçu à partir du dispositif de contrôle d'utilisation (110) ; et
une partie de traitement de règlement (20) exécutant un traitement de facturation des frais d'utilisation calculés par la partie de calcul de frais d'utilisation (18) à l'utilisateur, **caractérisé en ce que** :
la machine-outil (101) inclut un mécanisme principal effectuant l'usinage et inclut, en tant que mécanisme périphérique (105) fourni autour du mécanisme principal, un ou plusieurs éléments choisis parmi un robot et un appareil de chargement/déchargement de pièces à usiner ;
la partie d'obtention d'informations d'utilisation (116) du dispositif de contrôle d'utilisation (110) est configurée pour obtenir des informations sur l'utilisation du mécanisme périphérique (105) en tant qu'informations sur l'utilisation de la machine-outil (101) à partir du mécanisme périphérique (105) ;
la partie de transmission d'informations d'utilisation (118) du dispositif de contrôle d'utilisation (110) est configurée pour transmettre au dispositif de gestion (10) les informations sur l'utilisation de la machine-outil (101), y compris les informations sur l'utilisation du mécanisme périphérique (105), obtenues par la partie d'obtention d'informations d'utilisation (116) ;
la partie de calcul de frais d'utilisation (18) du dispositif de gestion (10) est configurée pour calculer les frais d'utilisation incluant un coût correspondant à l'utilisation du mécanisme périphérique (105) reçu à partir du dispositif de contrôle d'utilisation (110) ; et
le dispositif de contrôle d'utilisation (110) inclut en outre une partie de traitement de règlement (115) exécutant le traitement consistant à facturer les frais d'utilisation à l'utilisateur en coopération avec la partie de traitement de règlement (20) du dispositif de gestion (10).

5. Système de gestion de machine-outil (1), comprenant :
au moins une machine-outil (101) à laquelle est attaché un dispositif de contrôle d'utilisation (110) doté d'une fonction de communication pour se connecter à l'Internet (2), la machine-outil (101) étant disposée à un endroit accessible à un utilisateur spécifié ou non spécifié ; et
un dispositif de gestion (10) connecté à l'Internet (2) et communiquant avec le dispositif de contrôle d'utilisation (110),
le dispositif de contrôle d'utilisation (110) incluant :
une partie d'obtention d'information d'utilisation (116) obtenant des informations sur l'utilisation de la machine-outil (101) ; et
une partie de transmission d'informations d'utilisation (118) transmettant les informations sur l'utilisation de la machine-outil (101) obtenues par la partie d'obtention d'informations d'utilisation (116) au dispositif de gestion (10),
le dispositif de gestion (10) incluant :
une partie de calcul de frais d'utilisation (18) calculant, en tant que frais d'utilisation, un coût correspondant à l'utilisation de la machine-outil (101) reçu à partir du dispositif de contrôle d'utilisation (110) ; et
une partie de traitement de règlement (20) exécutant un traitement de facturation des frais d'utilisation calculés par la partie de calcul de frais d'utilisation (18) à l'utilisateur, **caractérisé en ce que** :
un ou plusieurs éléments choisis parmi un mandrin, une mordache, un porte-outil, un embout jetable, et un instrument de mesure amovible, en tant qu'instrument accessoire (106) à utiliser lors de l'usinage effectué avec la machine-outil (101), sont fournis autour de la machine-outil (101) ;
le dispositif de contrôle d'utilisation (110) inclut en outre une partie de demande d'autorisation d'utilisation (111) pour demander l'autorisation d'utiliser l'instrument accessoire (106) ;
la partie d'obtention d'informations d'utilisation (116) du dispositif de contrôle d'utilisation (110) est configurée pour obtenir des informations sur l'utilisation de l'instrument accessoire (106) correspondant à des conditions d'utilisation de l'instrument accessoire (106) entrées dans la partie de demande d'autorisation d'utilisation (111), en tant qu'informations sur l'utilisation de la machine-outil (101) ;
la partie de transmission d'informations d'utilisation (118) du dispositif de contrôle d'utilisation (110) est configurée pour transmettre au dispositif de gestion (10) les informations sur l'utilisation de la machine-outil (101), y compris les informations sur l'utilisation de l'instrument accessoire (106) obtenues par la partie d'obtention d'informations d'utilisation (116) ;
la partie de calcul de frais d'utilisation (18) du dispositif de gestion (10) est configurée pour calculer les frais d'utilisation incluant un coût correspondant à l'utilisation de l'instrument accessoire (106) reçu à partir du dispositif de contrôle d'utilisation (110) ; et
le dispositif de contrôle d'utilisation (110) inclut en outre une partie de traitement de règlement (115) exécutant le traitement consistant à facturer les frais d'utilisation à l'utilisateur en coopération avec la partie de traitement de règlement (20) du dispositif de gestion (10).

6. Système de gestion de machine-outil (1) selon l'une quelconque des revendications 1 à 5, **caractérisé en ce que** :
le dispositif de contrôle d'utilisation (110) inclut une partie de demande d'enregistrement d'utilisateur (113) pour exécuter un traitement d'enregistrement de l'utilisateur dans le dispositif de gestion (10) ; et
le dispositif de gestion (10) inclut ;
une partie de traitement d'enregistrement d'utilisateur (11) acceptant une demande d'enregistrement de la partie de demande d'enregistrement d'utilisateur (113) et exécutant un traitement d'enregistrement pour l'utilisateur ; et
une partie de transmission d'informations d'identification (13) exécutant un traitement de transmission d'informations d'identification pour l'utilisateur enregistré par la partie de traitement d'enregistrement d'utilisateur (11) au dispositif de contrôle d'utilisation (110).

7. Système de gestion de machine-outil (1) selon l'une quelconque des revendications 1 à 6, **caractérisé en ce que** :
la machine-outil (101) est équipée de divers capteurs (107) qui détectent chacun un état de la machine-outil (101) ;
la partie d'obtention d'informations d'utilisation (116) du dispositif de contrôle d'utilisation (110) est configurée pour obtenir des informations obtenues à partir des différents capteurs (107), en tant qu'informations sur l'utilisation de la machine-outil (101) ; et
la partie de transmission d'informations d'utilisation (118) du dispositif de contrôle d'utilisation (110) est configurée pour transmettre au dispositif de gestion (10) les informations sur l'utilisation de la machine-outil (101), y compris les informations obtenues à partir des différents capteurs (107) obtenus par la partie d'obtention d'informations (116).

8. Système de gestion de machine-outil (1) selon l'une quelconque des revendications 1 à 6, **caractérisé en ce que** :
la machine-outil (101) est équipée de divers capteurs (107) qui détectent chacun un état de la machine-outil (101) ;
le dispositif de contrôle d'utilisation (110) inclut :
une partie d'obtention d'informations de capteurs (119) qui obtient des données de sortie des différents capteurs (107) ; et
une partie de transmission d'informations de capteurs (121) transmettant les données de sortie des différents capteurs (107) obtenues par la partie d'obtention d'informations de capteurs (119) au dispositif de gestion (10) ;
le dispositif de gestion (10) inclut :
une partie de jugement d'anomalie (23) analysant les données de sortie des différents capteurs (107) reçues à partir de la partie de transmission d'informations de capteurs (121) du dispositif de contrôle d'utilisation (110) et déterminant si la machine-outil (101) présente une anomalie ou s'il est prévu que la machine-outil (101) tombe dans un état présentant une anomalie ; et
une partie de transmission de signal d'anomalie (24) transmettant, lorsqu'il est déterminé par la partie de jugement d'anomalie (23) que la machine-outil (101) présente une anomalie ou qu'il est prévu que la machine-outil (101) tombe dans l'état présentant une anomalie, un signal relatif à l'anomalie au dispositif de contrôle d'utilisation (110).

9. Système de gestion de machine-outil (1) selon l'une quelconque des revendications 1 à 8, **caractérisé en ce que** :
le dispositif de contrôle d'utilisation (110) inclut :
une partie d'obtention d'informations opérationnelles (122) obtenant, en tant que données sur un état opérationnel, une ou plusieurs données choisies parmi des données de vitesse de coupe, des données de vitesse d'avance, des données de matériau de la pièce à usiner, des données de matériau de l'outil, des données de vitesse de rotation de la broche, et des données de durée de vie de l'outil, à partir de la machine-outil (101) ; et
une partie de transmission d'informations opérationnelles (124) transmettant des informations sur l'état opérationnel obtenu au dispositif de gestion (10) ; et
le dispositif de gestion (10) inclut :
une partie d'analyse d'informations (26) analysant les données sur l'état opérationnel reçues à partir de la partie de transmission d'informations opérationnelles (124) pour extraire des informations de technologie de production ; et
une mémoire d'informations de technologie de production (27) stockant les informations de technologie de production extraites par la partie d'analyse d'informations (26).

10. Système de gestion de machine-outil (1) selon la revendication 9, **caractérisé en ce que** :
le dispositif de contrôle d'utilisation (110) inclut une partie de demande d'informations de technologie de production (125) qui exécute un traitement de demande d'autorisation auprès du dispositif de gestion (10) pour utiliser les informations de technologie de production stockées dans la mémoire d'informations de technologies de production (27) ;
le dispositif de gestion (10) inclut une partie de transmission d'informations de technologie de production (29) qui transmet les informations de technologie de production stockées dans la mémoire d'informations de technologie de production (27) au dispositif de contrôle d'utilisation (110) en réponse à une demande de la partie de demande d'informations de technologie de production (125) ; et
la partie de calcul de frais d'utilisation (18) du dispositif de gestion (10) est configurée pour calculer les frais d'utilisation de la machine-outil (101) en fonction de l'utilisation ou de la non-utilisation des informations de technologie de production.

11. Système de gestion de machine-outil (1) selon l'une quelconque des revendications 1 à 10, **caractérisé en ce que** :
la machine-outil (101) est disposée à un endroit accessible à un utilisateur non spécifié ;
le dispositif de contrôle d'utilisation (110) inclut en outre :
une partie de demande d'autorisation d'utilisation (111) exécutant un traitement de demande d'autorisation d'utilisation de la machine-outil (101) auprès du dispositif de gestion (10) ; et
une partie de traitement d'autorisation d'utilisation (112) exécutant, lors de l'obtention de l'autorisation auprès du dispositif de gestion (10), un traitement de mise en service de la machine-outil (101) ; et
le dispositif de gestion (10) inclut en outre :
une partie de jugement d'admissibilité (15) exécutant, lors de la réception d'un signal demandant l'autorisation d'utiliser la machine-outil (101) à partir de la partie de demande d'autorisation d'utilisation (111) du dispositif de contrôle d'utilisation (110), un traitement de reconnaissance de l'utilisateur et de jugement d'admissibilité ; et
une partie de transmission d'admissibilité (16) exécutant un traitement de transmission d'un résultat du jugement par la partie de jugement d'admissibilité (15) au dispositif de contrôle d'utilisation (110).
